(19) Europäisches Patentamt
European Patent Office
Office européen des brevets

(11) EP 2 791 783 B1

(12) **FASCICULE DE BREVET EUROPEEN**

(45) Date de publication et mention de la délivrance du brevet:
**17.04.2019 Bulletin 2019/16**

(21) Numéro de dépôt: **12815733.6**

(22) Date de dépôt: **12.12.2012**

(51) Int Cl.:
***G06F 7/72*** *(2006.01)*

(86) Numéro de dépôt international:
**PCT/FR2012/052901**

(87) Numéro de publication internationale:
**WO 2013/088065 (20.06.2013 Gazette 2013/25)**

# (54) PROCÉDÉ DE GÉNÉRATION DE NOMBRES PREMIERS PROUVÉS ADAPTÉ AUX CARTES A PUCE

VERFAHREN ZUR ERZEUGUNG VON NACHGEWIESENERMASSEN FÜR CHIPKARTEN GEEIGNETE PRIMZAHLEN

METHOD FOR GENERATING PRIME NUMBERS PROVEN SUITABLE FOR CHIP CARDS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.12.2011 FR 1161742**
**15.12.2011 FR 1161739**
**15.12.2011 FR 1161740**
**15.12.2011 FR 1161741**
**30.05.2012 FR 1201550**

(43) Date de publication de la demande:
**22.10.2014 Bulletin 2014/43**

(73) Titulaire: **Inside Secure**
**13590 Meyreuil (FR)**

(72) Inventeurs:
- **FEIX, Benoît**
  **F-13400 Aubagne (FR)**
- **CLAVIER, Christophe**
  **F-87800 Rilhac Lastours (FR)**
- **PAILLIER, Pascal**
  **F-75020 Paris (FR)**
- **THIERRY, Loïc**
  **F-87500 Saint-Yrieix-la-Perche (FR)**

(74) Mandataire: **de Roquemaurel, Bruno et al**
**OMNIPAT**
**24 Place des Martyrs de la Résistance**
**13100 Aix en Provence (FR)**

(56) Documents cités:
- **SHAWE-TAYLOR J: "Generating strong primes", ELECTRONICS LETTERS UK, vol. 22, no. 16, 31 juillet 1986 (1986-07-31), pages 875-877, XP002681158, ISSN: 0013-5194 cité dans la demande**
- **"Developments in Primality Testing" In: J. Brillhart, D.H. Lehmer, J.L. Selfridge, B. Tuckerman, S.S. Wagstaff Jr.: "Factorizations of b^n+-1 - b=2,3,5,6,7,10,11,12 - Up to High Powers", 31 décembre 1988 (1988-12-31), American Mathematical Society, Providence, Rhode Island, XP002682976, ISBN: 0-8218-5078-4 vol. 22, pages lviii-lxvii, cité dans la demande le document en entier Theorem 11**
- **C. CLAVIER, B. FEIX, L. THIERRY, P. PAILLIER: "Generating Provable Primes Efficiently on Embedded Devices", PUBLIC KEY CRYPTOGRAPHY - PKC 2012. 15TH INTERNATIONAL CONFERENCE ON PRACTICE AND THEORY IN PUBLIC KEY CRYPTOGRAPHY, 21 mai 2012 (2012-05-21), - 23 mai 2012 (2012-05-23), pages 372-389, XP002683867, Springer Verlag Berlin, Germany DOI: 10.1007/978-3-642-30057-8_22 ISBN: 978-3-642-30056-1**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 791 783 B1

Printed by Jouve, 75001 PARIS (FR)

**(Cont. page suivante)**

- CHENGHUAI LU ET AL: "Implementation of Fast RSA Key Generation on Smart Cards", APPLIED COMPUTING 2002: PROCEEDINGS OF THE 2002 ACM SYMPOSIUM ON APPLIED COMPUTING ; UNIVERSIDAD CARLOS III DE MADRID, MADRID, SPAIN, MARCH 11 - 14, 2002, ACM. ASSOCIATION FOR COMPUTING MACHINERY, US, 1 janvier 2002 (2002-01-01), pages 214-220, XP002415054, ISBN: 978-1-58113-445-2
- JOYE M ET AL: "EFFICIENT GENERATION OF PRIME NUMBERS", CRYPTOGRAPHIC HARDWARE AND EMBEDDED SYSTEMS. 2ND INTERNATIONAL WORKSHOP, CHES 2000, WORCHESTER, MA, AUG. 17 - 18, 2000 PROCEEDINGS; [LECTURE NOTES IN COMPUTER SCIENCE], BERLIN : SPRINGER, DE, vol. VOL. 1965, 17 août 2000 (2000-08-17), pages 340-354, XP001049142, ISBN: 978-3-540-41455-1 cité dans la demande
- G. JAESCHKE: "On strong pseudoprimes to several bases", MATHEMATICS OF COMPUTATION, vol. 61, 31 octobre 1993 (1993-10-31), pages 915-926, XP002681159, cité dans la demande

## Description

La présente invention concerne la cryptographie et en particulier la génération de nombres premiers. Elle concerne également les circuits intégrés tels que ceux équipant les cartes à puce, et la génération de nombres premiers dans de tels circuits intégrés.

Grâce à Diffie et Hellman notamment, la cryptographie à clé publique s'est considérablement développée. Aujourd'hui, elle est utilisée dans de nombreuses applications, telles que des applications de paiement, de commerce électronique, et d'identification, ainsi que pour chiffrer et signer des données, et dans de nombreux dispositifs tels que des cartes à puce, des clés USB et de nombreux microprocesseurs et ordinateurs. La plupart des systèmes de cryptographie comme RSA (Rivest, Shamir, Adleman), DSA (Digital Signature Algorithm) et DH (Diffie Hellman key exchange) sont basés sur l'utilisation de grands nombres premiers pour générer des clés cryptographiques, ou plus généralement des données secrètes susceptibles d'être utilisées dans des transactions nécessitant un certain degré de sécurité. La sécurité de ces systèmes de cryptographie est donc directement liée à la taille des nombres premiers utilisés.

En raison de l'évolution permanente de la technologie et en particulier des capacités de calcul des ordinateurs, les systèmes de cryptographie utilisent des clés cryptographiques de plus en plus grandes et donc des nombres premiers également de plus en plus grands. Ainsi, certains organismes bancaires recommandent aujourd'hui d'utiliser des nombres premiers de 1024 bits, voire dans certaines applications, de 2048 bits.

Habituellement, la génération d'un nombre premier consiste à choisir aléatoirement un nombre et à vérifier qu'il est premier, par exemple en appliquant un test de primalité tel que le crible d'Eratosthène ou le test de Fermât. Si le nombre choisi ne satisfait pas au test de primalité, un nouveau nombre est alors choisi. Le choix d'un nouveau nombre diffère d'une méthode à l'autre. Il s'avère que la génération d'un nombre premier constitue la tâche de calcul la plus lourde à mettre en oeuvre dans les systèmes de cryptographie couramment utilisés aujourd'hui.

Jusqu'à récemment, il était impensable de faire réaliser cette tâche de génération de nombres premiers dans un microcircuit de carte à puce en raison des faibles capacités de calcul et de stockage de ce dernier. Cette tâche était donc réalisée par un puissant ordinateur, et la donnée secrète générée à partir du nombre premier était transmise de manière sécurisée au microcircuit.

Les microcircuits de carte à puce actuels sont généralement équipés de coprocesseurs cryptographiques pour accélérer certaines opérations comme les multiplications de grands nombres et les opérations d'exponentiation modulaire, et présentent une capacité de stockage de plus en plus importante. Ces perfectionnements permettent d'envisager de générer de grands nombres premiers directement dans la carte à puce. Cette approche apporte une plus grande sécurité puisqu'elle s'affranchit du risque de piratage de l'ordinateur ayant généré la donnée secrète, ou de piratage de la transmission de cette dernière à la carte à puce. En outre, grâce à cette approche, l'entité émettrice de la carte à puce ne peut pas connaître la donnée secrète si celle-ci est générée dans la carte. Cette approche permet également au microcircuit de regénérer un nombre premier, ainsi que des données secrètes basées sur ce nombre premier, lorsque cela s'avère nécessaire.

Cependant, les capacités de calcul et de mémorisation des microcircuits de carte à puce demeurent réduites comparativement à celles d'un ordinateur de bureau. Par ailleurs, en mode opérationnel, le temps de génération d'une clé doit rester inférieur à une limite acceptable pour l'utilisateur. Il apparaît donc souhaitable de développer un procédé de génération de grands nombres premiers qui nécessite de faibles moyens de calcul et de stockage, compatibles avec ceux équipant les cartes à puce.

Les méthodes classiques de génération de nombres premiers reposent sur l'usage de tests de primalité probabilistes tels que les tests de Miller-Rabin et de Lucas. Cependant un test probabiliste n'offre pas par définition une certitude absolue qu'un nombre généré soit premier et donc ne permet pas d'obtenir des nombres premiers prouvés. Une telle certitude s'avère cependant nécessaire lorsqu'un niveau de sécurité élevé est requis comme par exemple pour les applications de paiement et d'identification.

Le niveau de confiance d'un tel test peut être augmenté en exécutant plusieurs itérations du test. Ainsi, la génération d'un nombre premier de 1024 bits avec un niveau de confiance suffisant requiert 40 itérations du test de Miller-Rabin. Ce nombre d'itérations peut être réduit à 3 lorsque le test de Miller-Rabin est suivi du test de Lucas. Le test de Lucas s'avère toutefois peu compatible avec les capacités des cartes à puce.

Par ailleurs, en dépit des améliorations importantes apportées aux microcircuits intégrés dans les cartes à puces, le développement d'un logiciel adapté à un tel microcircuit reste délicat. Les microcircuits de carte à puce constituent un environnement présentant de multiples contraintes comparativement aux ordinateurs de bureau ou aux microprocesseurs équipant des appareils multimédia. En effet, la capacité des mémoires présentes dans ces microcircuits reste réduite. Certaines opérations cryptographiques mises en oeuvre par les algorithmes cryptographiques tels que DES (Digital Encryption System), AES (Advanced Encryption System), RSA et ECC (Elliptic Curve Cryptography) nécessitent d'être déportées dans un coprocesseur pour être réalisées suffisamment efficacement. Ainsi, les opérations d'exponentiation modulaire constituent les opérations les plus coûteuses dans les systèmes cryptographiques tels que RSA et DSA embarqués dans un microcircuit de carte à puce. De telles opérations d'exponentiation sont également nécessaires pour la génération de nombres premiers.

Il est également nécessaire que le microcircuit reste protégé contre des attaques visant à découvrir les données secrètes mémorisées ou manipulées par le microcircuit. Ces dernières années sont apparues un grand nombre de types d'attaques, si bien que le développement d'un microcircuit protégé contre tous les types d'attaques connus relève du défit pour les fabricants de produits de sécurité embarqués.

Pourtant, il peut être souhaitable de générer des nombres premiers par une méthode déterministe qui par définition offre une certitude absolue que les nombres obtenus sont premiers, et qui puisse être embarquée dans un microcircuit de carte à puce.

A cet effet, il existe des procédés itératifs de génération de grands nombres premiers prouvés à partir d'un nombre premier prouvé de relativement petite taille qui peut être inférieure à 32 bits. Ainsi, les publications [3] et [4] décrivent de tels procédés.

Il peut être souhaitable de réduire le temps d'exécution de tels procédés.

Des modes de réalisation concernent un procédé de cryptographie, mis en oeuvre dans un dispositif électronique, le procédé comprenant des étapes consistant à : a- générer un nombre premier, b- choisir un premier nombre entier, c- générer un nombre candidat premier ayant un nombre de bits souhaité par la formule suivante :

$$Pr = 2P \cdot R + 1$$

dans laquelle Pr est le nombre candidat premier, P est le nombre premier ayant un nombre de bits inférieur au nombre de bits souhaité du nombre candidat premier, et R est le premier nombre entier, d- appliquer au nombre candidat premier un premier test de primalité, e- si le nombre candidat premier réussit le premier test de primalité, fournir le nombre candidat premier en tant que nombre premier prouvé, sinon répéter les étapes b- à e-, et f- générer une clé cryptographique à partir du nombre premier prouvé fourni. Selon un mode de réalisation, le nombre de bits souhaité du nombre candidat premier est égal à trois fois le nombre de bits du nombre premier, à une unité près, le procédé comprenant, avant l'application du premier test de primalité, des étapes consistant à : calculer un quotient d'une division entière du premier nombre entier par le nombre premier, le premier nombre entier étant inférieur au carré du nombre premier incrémenté de un, et répéter l'étape b- si le quotient est pair, le premier test de primalité comprenant le calcul d'un second nombre entier obtenu en élevant un troisième nombre entier compris entre 2 et le nombre candidat premier décrémenté de 2, à la puissance deux fois le premier nombre entier, le nombre candidat premier étant premier s'il ne présente pas de diviseur commun avec le second nombre entier décrémenté de un, et si le résultat du troisième nombre entier élevé à la puissance le nombre candidat premier décrémenté de un, est égal à 1 modulo le nombre candidat premier.

Selon un mode de réalisation, si le quotient est pair ou si le nombre candidat premier ne réussit pas le test de primalité, le procédé comprend des étapes consistant à incrémenter le premier nombre entier de un ou d'une certaine quantité selon la parité du quotient pour qu'un nouveau quotient calculé à partir de la valeur de R incrémentée soit impair, modifier le nombre candidat premier en lui ajoutant deux fois le nombre premier, et appliquer le test de primalité au nombre candidat premier modifié.

Selon un mode de réalisation, le procédé comprend une étape de test de la divisibilité du nombre candidat premier par des petits nombres premiers, le nombre candidat premier généré n'étant retenu comme nombre candidat premier que s'il n'est pas divisible par les petits nombres premiers.

Selon un mode de réalisation, le procédé comprend plusieurs étapes de génération d'un nouveau nombre premier, une première étape de génération fournissant un nombre premier à partir d'un premier nombre premier, chaque étape de génération suivante fournissant un nombre premier à partir du nombre premier obtenu à l'étape de génération précédente, jusqu'à obtenir un nombre premier formé d'un nombre de bits souhaité, chaque étape de génération comprenant les étapes de génération d'un nombre candidat premier et d'application du test de primalité au nombre candidat premier.

Selon un mode de réalisation, le procédé comprend des étapes consistant à : mémoriser en tant que premiers restes, les restes des divisions entières du nombre candidat premier par chacun des petits nombres premiers, le nombre candidat premier étant divisible par l'un des petits nombres premiers si le reste correspondant est nul, mémoriser en tant que second restes, les restes des divisions entières de deux fois le nombre premier par chacun des petits nombres premiers, et si un nouveau nombre candidat premier est calculé à partir du nombre candidat premier en lui ajoutant deux fois le nombre premier, mettre à jour chacun des premiers restes en lui ajoutant respectivement le second reste correspondant au même petit nombre premier.

Selon un mode de réalisation, chaque étape de génération suivante d'un nombre premier comprend des étapes consistant à choisir aléatoirement un nouveau premier nombre entier, et mettre à jour chacun des seconds restes en recevant le double du premier reste correspondant au même petit nombre premier, obtenu lors de l'étape de génération précédente.

Selon un mode de réalisation, le premier nombre entier est choisi aléatoirement dans l'intervalle [I + 1, 2I] avec :

$$I = \left\lfloor \frac{2^{L-1}}{2P} \right\rfloor$$

L étant le nombre de bits souhaité du nouveau nombre premier à générer, et/ou de manière à être pair et à ce que le reste (S) de sa division entière par le premier nombre premier (P) soit impair, pour que le quotient (U) soit impair.

Selon un mode de réalisation, le procédé comprend des étapes de calcul du premier nombre entier à partir d'un nombre inversible appartenant à un ensemble d'éléments inversibles modulo un produit de nombres appartenant à un groupe de petits nombres premiers supérieurs à 2, afin que le nombre candidat premier ne soit divisible par aucun des nombres du groupe, le nombre premier ayant un nombre de bits égal à un bit près au tiers du nombre de bits souhaité du nombre candidat premier.

Selon un mode de réalisation, le nombre entier est choisi égal à :

$$R = X - ((2P)^{-1} \bmod \Pi v) + Z \cdot \Pi v,$$

X étant un nombre inversible modulo le produit des nombres premiers du groupe, P étant le nombre premier, et Z étant un nombre entier choisi de manière à ce que le nombre R ait une taille telle que le nombre candidat premier ait le nombre de bits souhaité.

Selon un mode de réalisation, le premier nombre entier est choisi de manière à être pair et de manière à ce que le reste de sa division entière par le nombre premier soit impair.

Selon un mode de réalisation, le premier nombre entier est choisi égal à :

$$R = K + (K \bmod 2)P \cdot \Pi v + 2P \cdot Z \cdot \Pi v,$$

avec $K = (((X - (2P)^{-1} - S)/P) \bmod \Pi v)P+S$, S étant le reste de la division entière du premier nombre entier R par le nombre premier P, X étant un nombre inversible modulo le produit $\Pi v$ des nombres premiers du groupe, P étant le nombre premier, et Z étant un quatrième nombre entier choisi de manière à ce que le nombre R ait une taille telle que le nombre candidat premier ait le nombre de bits souhaité.

Selon un mode de réalisation, si le nombre candidat premier ne réussit pas le test de primalité, il comprend des étapes de génération d'un nouveau nombre candidat premier en ajoutant au nombre candidat premier un multiple du nombre inversible modulo le produit, le multiple étant non divisible par l'un des nombres formant le produit, et d'application du test de primalité au nouveau nombre candidat premier.

Selon un mode de réalisation, le nombre inversible est généré en recherchant un nombre candidat inversible X inférieur au produit $\Pi v$ vérifiant l'équation suivante :

$$X^{\lambda \Pi v} = 1 \bmod \Pi v,$$

$\lambda\Pi v$ étant l'indicateur de Carmichael de l'ensemble des éléments inversibles modulo le produit $\Pi v$.

Selon un mode de réalisation, un nombre candidat inversible est choisi aléatoirement à une valeur inférieure au produit $\Pi v$ et incrémenté de un ou de la quantité $B \cdot (1 - X^{\lambda \Pi v} \bmod \Pi v) \cdot$ jusqu'à ce qu'il vérifie l'équation :

$$X^{\lambda \Pi v} = 1 \bmod \Pi v,$$

B étant un cinquième nombre entier choisi aléatoirement entre un et le produit $\Pi v$.

Selon un mode de réalisation, la génération du premier nombre premier comprend des étapes consistant à : choisir aléatoirement un nombre formé du nombre réduit de bits, et appliquer au nombre choisi un ensemble limité de tests de primalité de Miller-Rabin en différentes bases, jusqu'à ce que le nombre choisi passe avec succès l'ensemble de tests de Miller-Rabin, le nombre de bits maximum et les valeurs des bases étant choisis pour prouver la primalité du premier nombre premier.

Selon un mode de réalisation, les tests de Miller-Rabin appliqués au nombre choisi aléatoirement, sont effectués en bases 2, 7 et 61 avec un nombre de bits maximum choisi inférieur ou égal à 32, ou bien en bases 2, 3, 5, 7, 11, 13 et 17, avec un nombre de bits maximum choisi inférieur ou égal à 48.

Selon un mode de réalisation, le procédé comprend des étapes consistant à : générer une clé cryptographique à partir du nombre premier prouvé fourni.

Des modes de réalisation concernent également un dispositif électronique comprenant un bloc de calcul pour exécuter des multiplications de nombres de grande taille et/ou des opérations d'exponentiation modulaire, ce dispositif étant configuré pour mettre en oeuvre le procédé de génération de nombres premiers tel que défini précédemment.

Des modes de réalisation concernent également un circuit intégré sur microplaquette de semiconducteur, comprenant un dispositif tel que précédemment défini.

Des exemples de réalisation de l'invention seront décrits dans ce qui suit, à titre non limitatif en relation avec les figures jointes parmi lesquelles :

- la figure 1 représente une séquence d'étapes configurée pour générer un nombre premier de grande taille, selon un mode de réalisation,
- la figure 2 représente une séquence d'étapes configurée pour générer un nombre premier de petite taille, selon un mode de réalisation,
- la figure 3 représente une séquence d'étapes configurée pour générer un nombre premier à partir d'un nombre premier de taille inférieure, selon un mode de réalisation,
- les figures 4 et 5 représentent des séquences d'étapes mettant en oeuvre un test déterministe de primalité, selon des modes de réalisation,
- la figure 6 représente une séquence d'étapes configurée pour générer un nombre premier de petite taille, selon un mode de réalisation,
- les figures 7 et 8 représentent des séquences d'étapes configurées pour générer un nombre premier à partir d'un nombre premier de taille inférieure,
- la figure 9 représente une séquence d'étapes configurée pour tester la divisibilité d'un nombre par une liste de nombres premiers,
- la figure 10 représente une séquence d'étapes configurée pour générer un nombre premier à partir d'un nombre premier de taille inférieure, selon un mode de réalisation,
- les figures 11 et 12 représentent des séquences d'étapes configurées pour tester la divisibilité d'un nombre par une liste de nombres premiers,
- la figure 13 représente une séquence d'étapes configurée pour générer un nombre premier à partir d'un nombre premier de taille inférieure, selon un autre mode de réalisation,
- la figure 14 représente une séquence d'étapes d'initialisation appelée par la séquence de la figure 13,
- la figure 15 représente une séquence d'étapes configurée pour générer un nombre premier à partir d'un nombre premier de taille inférieure, selon un autre mode de réalisation,
- la figure 16 représente une séquence d'étapes d'initialisation appelée par la séquence de la figure 15,
- la figure 17 représente une séquence d'étapes appelée par la séquence de la figure 15 et configurée pour tester la divisibilité d'un nombre par une liste de nombres premiers,
- la figure 18 représente une séquence d'étapes configurée pour générer un nombre premier à partir d'un nombre premier de taille inférieure, selon un autre mode de réalisation,
- les figures 19 et 20 représentent des séquences d'étapes de génération d'un nombre inversible, appelées par la séquence de la figure 13, selon des modes de réalisation,
- la figure 21 représente une séquence d'étapes configurée pour générer un nombre premier à partir d'un nombre premier de taille inférieure, selon un autre mode de réalisation,
- la figure 22 représente schématiquement un exemple de dispositif électronique pouvant mettre en oeuvre les diverses séquences d'étapes présentées dans les figures 1 à 21,
- les figures 23 et 24 représentent des séquences d'étapes de génération de clés cryptographiques, utilisant des nombres premiers.

Selon l'invention, il est proposé de générer un nombre premier d'une certaine taille en nombre de bits en se basant sur un théorème dérivé du théorème démontré par Brillhart, Lehmer et Selfridge (cf. publication [6]). Le théorème dérivé est formulé comme suit :

*Soient P un nombre premier supérieur à 2 et R un nombre entier inférieur à $P^2+1$. Le nombre N tel que :*

$$N = 2R \cdot P+1 \qquad (1)$$

*est premier,*

*(i) s'il existe un nombre entier A supérieur ou égal à 2 et inférieur ou égal à N tel que :*

$$A^{N-1} = 1 \mod N, \ et \quad (2)$$

$$GCD(A^{2R} - 1, N) = 1, \quad (3)$$

*(ii) le quotient de la division entière de R par P,* $\left\lfloor \frac{R}{P} \right\rfloor$*, est impair,*

*mod représentant l'opération modulo et GCD(x,y) étant une fonction donnant le plus grand commun diviseur des nombres x et y.*

Ce théorème permet d'obtenir un nombre premier à partir d'un nombre premier de taille inférieure. Ce théorème peut donc être appliqué en plusieurs itérations, à partir d'un nombre premier de petite taille obtenu par un autre procédé, puis à partir du nombre premier obtenu lors de l'itération précédente, jusqu'à l'obtention d'un nombre premier de la taille souhaitée. Etant donné la relation entre les nombres N et P, un simple choix de la taille du nombre R peut permettre d'obtenir un nouveau nombre premier ayant une taille égale sensiblement au triple de la taille du nombre premier P. Il est à noter que le caractère premier des nombres obtenus en appliquant ce théorème est prouvé, par opposition au caractère probabiliste de nombres premiers obtenus par certains procédés connus, par exemple basés sur le test de Fermat ou de Miller-Rabin.

Ainsi, la figure 1 représente des étapes S1 à S9 d'une procédure GNLP de génération d'un grand nombre premier. La procédure GNLP reçoit en tant que paramètre d'entrée la taille Ln en nombre de bits du nombre premier à générer. Les étapes S1 à S4 permettent de déterminer la taille L (en nombre de bits) d'un premier nombre premier à générer à partir de la taille Ln du nombre premier à générer.

A l'étape S1, la taille Ln reçue en paramètre est chargée dans une variable locale L. A l'étape S2, la variable L reçue en entrée de la procédure est comparée à une valeur maximum LL du premier nombre premier, par exemple égale à 32 ou 48 bits. Aux étapes S2 et S3, tant que la variable L est plus grande que la taille maximum LL, la valeur de la variable L est divisée par 2 (reçoit le quotient de la division entière de L par 3). Lorsque la variable L est inférieure à la taille maximum LL, la taille L est incrémentée de un à l'étape S4.

Il est à noter que si la mémoire du circuit destiné à exécuter la procédure GNLP le permet, les étapes S2 à S4 peuvent être remplacées par la lecture d'une table indexée par taille Ln de nombre premier à générer et donnant la taille L0 du premier nombre à générer. En effet, la taille Ln est généralement limitée à un nombre réduit de valeurs possibles, notamment des puissances de 2. Un exemple de cette table lorsque la valeur maximum LL est égale à 32, est donné par la table 1 suivante :

Table 1

| Ln | 512 | 768 | 1024 | 2048 |
|---|---|---|---|---|
| L0 | 20 | 29 | 14 | 26 |
| k | 3 | 3 | 4 | 4 |

A l'étape S5 suivant l'étape S4, est appelée une procédure INTP de détermination d'un premier nombre premier ayant la taille L. La procédure reçoit en paramètre d'entrée la variable L et le produit $\Pi v$ de v plus petits nombres premiers, et fournit un nombre premier Pr. Les v petits nombres premiers dans le produit $\Pi v$ sont par exemple ceux inférieurs à 100 ou 200 (v compris entre 25 et 46), le nombre 2 pouvant être exclu. A l'étape S6, la variable L est comparée avec la taille Ln du nombre premier à générer. Cette étape marque l'entrée d'une boucle de traitement dans laquelle les étapes S7 à S9 sont exécutées à chaque itération de la boucle de traitement, jusqu'à ce que la taille Ln du nombre premier à générer soit atteinte. A l'étape S6, si la variable L est inférieure à la taille Ln, les étapes S7 à S9 sont exécutées, sinon la procédure GNLP se termine en fournissant le dernier nombre Pr obtenu.

A l'étape S7, une variable P reçoit le dernier nombre premier Pr obtenu. A l'étape S8, la valeur de la variable L est triplée à une unité près (= 3L-1) sans dépasser la taille Ln du nombre premier à générer. Le calcul de la taille L du nombre premier suivant à générer, effectué à l'étape S8, permet de réaliser la condition $R < P^2+1$ du théorème énoncé précédemment. A l'étape S9, une procédure GNSP est appelée avec pour paramètres d'entrée les variables P et L. La procédure GNSP fournit un nombre premier Pr ayant la taille L à partir du nombre premier P de taille inférieure fourni en entrée. A cet effet, la procédure GNSP se base sur le théorème dérivé énoncé précédemment. Il est à noter que les valeurs de k fournies dans la table 1 représentent le nombre d'itérations effectuées par la procédure GNLP. La condition $R < P^2+1$ du théorème dérivé énoncé précédemment est satisfaite sensiblement par l'opération exécutée à l'étape S8 pour déterminer la taille du nombre premier à générer suivant.

Selon un mode de réalisation, la procédure INTP peut mettre en oeuvre le crible d'Eratosthène, c'est-à-dire, choisir aléatoirement un nombre candidat premier présentant une petite taille par exemple comprise entre 16 et 24 bits, et tester la divisibilité du nombre candidat premier par tous les nombres premiers inférieurs à la racine carrée du nombre candidat premier.

Selon un autre mode de réalisation, le premier nombre premier Pr obtenu à l'étape S5 peut être fixé à une certaine valeur.

Selon un autre mode de réalisation, la procédure INTP peut consister à choisir aléatoirement un nombre premier dans une liste préétablie de nombres premiers de même taille fixée à une valeur inférieure à 33 ou 49 bits.

Selon un autre mode de réalisation, le premier nombre premier de petite taille fourni par la procédure INTP à l'étape S5 est obtenu en choisissant de manière aléatoire un nombre ayant une taille inférieure à 32 bits, et en appliquant le test probabiliste de Miller-Rabin, successivement avec les bases 2, 7 et 61. En effet, Pomerance et al. (cf. publication [1]) et Jaeschke (cf. publication [2]) ont démontré que tout nombre entier ayant une taille inférieure à 32 bits est premier de manière prouvée, s'il passe avec succès le test de Miller-Rabin pour les bases 2, 7 et 61. Le paramètre LL dans les procédures GNLP, GNLP1, GNM et GNST est alors fixé à 32 et représente la taille maximum en nombre de bits que peut avoir le nombre premier généré par la procédure INTP.

Le test de Miller-Rabin consiste à décomposer un nombre candidat premier N à tester, diminué de 1, de la manière suivante :

$$N - 1 = 2^S \times D, \tag{4}$$

S étant un nombre entier, D étant un nombre impair, et en vérifiant que pour un nombre A appelé "base", inférieur et premier avec N, l'une des équations suivantes est satisfaite :

$$A^D = 1 \mod N, \tag{5}$$

$$A^{2^R D} = -1 \mod N, \tag{6}$$

R étant un nombre entier compris entre 0 et S-1. Ainsi, selon le test de Miller-Rabin, le nombre N est probablement premier si l'une ou l'autre des équations (4) et (5) est satisfaite. Le premier nombre premier est donc obtenu en appliquant trois fois le test de Miller-Rabin, avec le nombre A choisi successivement égal à 2, 7 et 61, et en écartant les nombres candidats N ne vérifiant pas le test en base 2, 7 ou 61.

Selon un autre mode de réalisation, l'application des tests de Miller-Rabin en bases 2, 7 et 16 est précédée d'une étape de test de la divisibilité du nombre candidat premier par les v plus petits nombres premiers, v étant compris par exemple entre 20 et 50. En d'autres termes, un nombre candidat N est écarté s'il est divisible par l'un des v plus petits nombres premiers.

Selon un autre mode de réalisation, l'application du test de Miller-Rabin en bases 2, 7 et 16 est précédé d'une étape d'application du test probabiliste de Fermat en base 2. Selon le test de Fermât, le nombre N est probablement premier si la condition suivante est satisfaite :

$$A^{N-1} = 1 \mod N, \tag{7}$$

dans laquelle A est un nombre entier représentant la base (choisie égale à 2).

Selon un mode de réalisation, le premier nombre premier de petite taille est obtenu en exécutant une séquence d'étapes telle que représentée sur la figure 2. La figure 2 représente une procédure INTP recevant en paramètre d'entrée la taille L du nombre premier à générer et le produit $\Pi v$ des v plus petits nombres premiers, et fournissant un nombre premier Pr de la taille L, L étant inférieur à 32. La procédure INTP comprend des étapes S21 à S24b. A l'étape S21, un nombre Pr de taille L est choisi aléatoirement à l'aide d'une fonction aléatoire ou pseudo-aléatoire RND. Les étapes S22 à S24b sont des tests de primalité appliqués successivement au nombre Pr.

A l'étape S22, il est recherché si le nombre Pr est divisible par l'un des v nombres premiers du produit Πv et le test échoue si le nombre Pr est divisible par l'un des v nombres du produit Πv. Ce test peut être effectué en recherchant le plus grand commun diviseur GCD du nombre Pr et du produit Πv, le nombre Pr n'étant divisible par aucun des v plus petits nombres premiers si le plus grand commun diviseur ainsi calculé est égal à 1. Le produit Πv peut ne pas comprendre le nombre 2 si le nombre Pr est choisi impair à l'étape S21. Au lieu de recevoir le produit Πv, la procédure peut recevoir les v premiers nombres premiers sous la forme d'une liste Q, et l'étape 22 peut consister à tester successivement la divisibilité du nombre Pr par chacun des nombres premiers d'une liste Q contenant les v nombres premiers du produit Πv.

Selon un autre mode de réalisation, le test de la divisibilité du nombre Pr par l'un de ces nombres premiers peut consister à calculer le plus grand commun diviseur des nombres Pr et Πv,. A l'étape S23, le test de Fermat en base 2 est appliqué au nombre Pr. Aux étapes S24, S24a et S24b, les tests de Miller-Rabin en bases 2, 7 et 61 sont respectivement et successivement appliqués au nombre Pr.

Si l'un des tests échoue, l'étape S21 est à nouveau exécutée pour choisir un autre nombre Pr. Si l'un des tests est exécuté avec succès à l'une des étapes S22 à S24a, l'étape suivante S23 à S24b est exécutée. Si le dernier test de primalité exécuté à l'étape S24b est exécuté avec succès, la procédure INTP se termine en fournissant le nombre Pr dont la primalité est ainsi prouvée.

La figure 3 représente des étapes S31 à S36 de la procédure GNSP, selon un mode de réalisation. Les étapes S31 à S36 sont exécutées successivement. A l'étape S31, un nombre I est calculé par la formule suivante :

$$I = \left\lfloor \frac{2^{L-1}}{2P} \right\rfloor \qquad (8)$$

P étant un nombre premier, L étant la taille d'un nouveau nombre premier à générer, P et L étant reçus en paramètres d'entrée de la procédure GNSP, et $\left\lfloor \frac{x}{y} \right\rfloor$ représentant le quotient de la division entière de x par y. A l'étape S32, un nombre entier R est choisi à l'aide d'une fonction RND aléatoire ou pseudo-aléatoire dans l'intervalle [I + 1, 2I]. Les étapes suivantes S33 et S34 sont prévues pour mettre en oeuvre le test (ii) du théorème énoncé précédemment, sachant que le test (i) est mis en oeuvre par l'étape S36. A l'étape S33, le quotient U de la division entière du nombre R par le nombre P est calculé. A l'étape S34, si le quotient U est pair, l'exécution de la procédure est reprise à l'étape S33 pour déterminer un nouveau nombre entier R. Si le quotient U est impair, l'étape S35 est exécutée pour déterminer un nombre candidat premier Pr par la formule (1). A l'étape S36, la primalité du nombre candidat premier Pr est testée à l'aide du test (i) correspondant au test de Pocklington. Ce test est mis en oeuvre par une procédure PCKT. Cette procédure reçoit en paramètres d'entrée, le nombre Pr à tester et le nombre R utilisé pour calculer le nombre Pr à l'étape S35, ainsi qu'optionnellement la taille L en nombre de bits du nombre Pr. Cette procédure renvoie une variable booléenne à "Vrai" si le nombre Pr a passé avec succès le test, et à "Faux" dans le cas contraire. Si la procédure PCKT retourne "Vrai", le nombre Pr est premier et la procédure GNSP se termine en fournissant le nombre Pr. Si la procédure PCKT retourne "Faux", l'exécution de la procédure GNSP est reprise à l'étape S33 pour déterminer un nouveau nombre entier R.

La figure 4 représente des étapes S52 à S56 de la procédure PCKT, selon un mode de réalisation. Cette procédure applique successivement aux nombres P et R reçus en entrée par la procédure PCKT les tests correspondant aux équations (2) et (3). Si les nombres P et R réussissent les deux tests, la procédure PCKT retourne "Vrai", sinon "Faux". A l'étape S52, un nombre entier A est choisi à l'aide d'une fonction RND aléatoire ou pseudo-aléatoire dans l'intervalle [2, P-2]. A l'étape S53, si le nombre P vérifie à l'équation (2), l'étape S54 est exécutée, sinon l'étape S55 est exécutée. A l'étape S54, si les nombres P et R vérifient l'équation (3), l'étape S46 est exécutée, sinon l'étape S55 est exécutée. A l'étape S55, une variable booléenne TST est mise à "Faux". A l'étape S56, la variable TST est mise à "Vrai". La procédure PCKT se termine après l'étape S55 ou S56 en retournant la variable TST.

Il est à noter que l'équation (3) testée à l'étape S54 peut être mise en oeuvre en calculant d'abord la quantité $B = A^{2R} - 1 \bmod P$, puis en calculant GCD (B, P).

La figure 5 représente un autre mode de réalisation PCKT1 de la procédure PCKT de la figure 4. La procédure PCKT1 diffère de la procédure PCKT en ce qu'elle comprend des étapes S50 et S51 supplémentaires permettant de forcer le nombre A à 2 (étape S51) si la taille L du nombre P reçu en paramètre d'entrée de la procédure est supérieure ou égale à une certaine valeur par exemple égale à 129 (étape S50). Le forçage du nombre A à 2 permet d'effectuer plus rapidement les opérations d'exponentiation modulaire aux étapes S53 et S54 lorsque les nombres P et R sont grands. En effet, lorsque le nombre A est fixé à 2, il s'agit alors de calculer des nombres de la forme $2^n$ qui peuvent être effectuées par un microcircuit, par des calculs de carrés et d'additions modulaires. Si l'on suppose que la proportion de nombres premiers rejetés en fixant la valeur du nombre A, ne change pas en fonction de cette valeur, le fait de fixer la valeur de A à une valeur constante telle que 2 présente un impact négligeable sur la distribution des nombres premiers générés lorsque la taille du nombre P à tester est suffisamment grande (par exemple supérieure à 128 bits). En effet, il a été démontré que la probabilité pour que le choix d'une certaine valeur de A entraine le rejet d'un nombre premier à l'étape S53 est égale à 1/P. Par conséquent, plus le nombre P est grand, plus cette probabilité est faible. A partir de L = 128, ce qui correspond à un nombre P de 64 bits, cette probabilité devient négligeable.

La figure 6 représente une procédure INTP1 de génération d'un premier nombre premier de petite taille, selon un autre mode de réalisation. Cette procédure est basée sur le fait qu'un nombre de moins de 48 bits ayant été testé avec succès par les tests de Miller-Rabin en bases 2, 3, 5, 7, 11, 13 et 17, est un nombre premier de manière prouvée. La procédure INTP1 diffère de la procédure INTP en ce que les tests de primalité de Miller-Rabin en bases 7 et 61 sont remplacés par des tests de Miller-Rabin en bases 3, 5, 7, 11, 13 et 17, et en ce que le nombre premier obtenu peut avoir une taille pouvant atteindre 48 bits. La taille maximum LL dans les procédures GNLP, GNLP1, GNM et GNST peut alors être fixée à 48. Ainsi, la procédure INTP1 comprend les étapes S21, S22 et S24 de la procédure INTP (figure 2). Ensuite la procédure INTP1 comprend des étapes S24c à S24h d'application du test de Miller-Rabin en bases 3, 5, 7, 11, 13 et 17. Si le nombre candidat premier Pr choisi à l'étape S21 réussi l'un des tests exécuté à l'une des étapes S22, S24, S24c à S24g, l'étape suivante S24, S24c à S24h est exécutée. Si le nombre premier Pr échoue à l'un des tests, un nouveau nombre candidat premier Pr est choisi à l'étape S21. Si le nombre candidat premier Pr vérifie tous les tests et en particulier le test de Miller-Rabin en base 17 exécuté à l'étape S24g, la procédure INTP1 se termine en fournissant le nombre Pr en tant que nombre premier prouvé.

Comme la procédure INTP1 peut fournir un nombre premier proche de 48 bits au lieu d'un nombre premier proche de 32 bits pour la procédure INTP, cette procédure peut réduire le nombre d'itérations de la procédure GNLP.

Il est à noter que l'étape S22 dans les procédures INTP et INTP1 est prévue pour éliminer des nombres candidats premiers plus facilement (à l'aide d'opérations moins coûteuses en ressources et en temps de calcul) qu'un test de Fermat ou de Miller-Rabin. L'étape S22 peut donc être omise sans que le caractère prouvé du nombre Pr fourni par la procédure INTP, INTP1 n'en soit affecté. Le test de Fermat exécuté à l'étape S23 de la procédure INTP est également prévu pour éliminer des nombres candidats premiers plus facilement que le test de Fermât. Cette étape peut être également supprimée si les moyens de calcul utilisés pour mettre en oeuvre cette procédure peuvent exécuter efficacement (en un temps admissible pour l'utilisateur) les tests de Miller-Rabin.

Le choix de la valeur du nombre v des plus petits nombres premiers utilisés à l'étape S22 peut être effectué en fonction de la durée globale d'exécution de la procédure INTP ou INTP1, sachant que plus on augmente la valeur v, plus la durée d'exécution de l'étape S22 augmente, et plus la durée globale d'exécution des tests effectués aux étapes S23 à S24b ou S24 à S24h diminue.

La figure 7 représente un autre mode de réalisation GNSP1 de la procédure GNSP de la figure 3. La procédure GNSP1 diffère de la procédure GNSP en ce qu'elle comprend deux étapes supplémentaires S37 et S38. Les étapes S37 et S38 sont exécutées au lieu de l'étape S32, si le quotient U est pair ou si la procédure PCKT appelée à l'étape S36 retourne "Faux". A l'étape S37, le nombre R est incrémenté de 1. A l'étape S38, le nombre R est comparé à la quantité 2I, pour que R reste dans l'intervalle [I + 1, 2I]. Si le nombre R est supérieur à la quantité 2I, l'exécution de la procédure est poursuivie à l'étape S32 pour choisir un nouveau nombre R aléatoirement dans l'intervalle [I + 1, 2I], pour calculer un nouveau nombre candidat premier Pr et tester ce dernier. Si à l'étape S38, le nombre R est inférieur ou égal à la quantité 2I, l'exécution de la procédure est poursuivie à l'étape S33. Ainsi, les étapes S33 à S36 forment une première boucle de traitement dans laquelle le nombre R varie de la valeur qui lui est attribuée à l'étape S33 jusqu'à la valeur 2I, le cas échéant, et dans laquelle la primalité du nombre Pr correspondant au nombre R est testée. Les étapes S32 à S36 forment une seconde boucle de traitement permettant d'exécuter la première boucle avec une nouvelle valeur de R choisie aléatoirement dans l'intervalle [I + 1, 2I].

De cette manière, si les tests de Pocklington exécutés à l'étape S36 échouent, on évite la multiplication de grands nombres effectuée à l'étape S35 tant que le nombre entier R est inférieur à la quantité 2I.

La figure 8 représente un autre mode de réalisation GNSP2 de la procédure GNSP de la figure 3. La procédure GNSP2 diffère de la procédure GNSP en ce qu'elle comprend des étapes supplémentaires S39 à S42. Les étapes S39 et S40 sont exécutées après l'étape S35. A l'étape S39, une procédure DVT1 de test de la divisibilité du nombre Pr par les v nombres premiers de la liste Q est appelée. La procédure DVT1 reçoit en paramètres d'entrée le nombre Pr, la liste Q et une table W, et fournit une variable booléenne TST à "Vrai" si le nombre Pr n'est pas divisible par les nombres de la liste Πv et à "Faux" ("False") dans le cas contraire. A l'étape S40, la variable TST est testée. Si la variable TST est à "Vrai" ("True"), l'étape S33 est exécutée, sinon l'étape S37 est exécutée. Si à l'étape S38, le nombre R est inférieur à la quantité 2I, les étapes S41, S39 et S40 sont successivement exécutées. A l'étape S41, le nombre Pr est mis à jour compte tenu de l'incrémentation du nombre R à l'étape S37. Ainsi à l'étape S40, le nombre Pr est simplement incrémenté de deux fois le nombre premier P. Ce calcul résulte de l'incrémentation du nombre R effectuée à l'étape S37 et de la formule (1). De cette manière, le nombre Pr peut être mis à jour simplement par un décalage binaire de P suivi d'une addition, au lieu de mettre en oeuvre une multiplication de grands nombres entiers comme dans la formule (1) mis en oeuvre à l'étape S35. Après l'étape S41, l'exécution de la procédure GNSP2 est poursuivie à l'étape S39.

Ainsi, les étapes S33, S34 et S36 à S42 forment une première boucle de traitement dans laquelle le nombre R est incrémenté de un à chaque itération jusqu'à la quantité 2l, le cas échéant, et dans laquelle la primalité du nombre Pr correspondant au nombre R est testée. Les étapes S32 à S42 forment une seconde boucle de traitement permettant d'exécuter la première boucle avec une nouvelle valeur de R choisie aléatoirement dans l'intervalle [l + 1, 2l]. Tant que le nombre Pr obtenu à l'étape S35 ou S41 ne satisfait pas aux tests de non divisibilité et de Pocklington, un nouveau nombre candidat premier est déterminé aux étapes S32 et S35 ou S41.

La figure 9 représente des étapes S70 à S75 de la procédure DVT1, selon un mode de réalisation. A l'étape S70, un indice de boucle j est initialisé à 0 et une variable booléenne TST est initialisée à "Vrai". L'étape S71 qui forme l'entrée d'une boucle comprenant les étapes S72 à S75, compare l'indice j au nombre v de petits nombres premiers dans la liste Q. Cette boucle permet de tester la divisibilité du nombre Pr par chacun des nombres Qj de la liste Q. Si l'indice j est inférieur au nombre v à l'étape S71, une itération de boucle commençant à l'étape S72 est exécutée, sinon la procédure DVT1 se termine en fournissant la variable TST. A l'étape S72, une variable Wj mémorisée en un emplacement d'indice j dans la table W, reçoit le reste de la division entière du nombre Pr par le nombre Qj. La variable Wj peut ainsi être calculée par la formule suivante :

$$Wj = Pr \bmod Qj \qquad (9)$$

A l'étape S73, la variable Wj est comparée à 0. Si la variable Wj est nulle, signifiant que le nombre candidat Pr est divisible par le nombre Qj, les étapes S74 et S75 sont exécutées, sinon seulement l'étape S75 est exécutée. A l'étape S74, la variable TST est mise à "Faux", pour indiquer que le nombre Pr n'est pas un nombre premier. A l'étape S75, l'indice j est incrémenté de un. L'étape S71 est exécutée après l'étape S75 soit pour exécuter une nouvelle itération, soit pour fournir la variable TST à la fin de l'exécution de la procédure DVT1. A noter que pour la procédure GNSP2, il n'est pas nécessaire de mémoriser les restes Wj dans une table. Le reste obtenu à l'étape S72 peut donc simplement être chargé dans un registre pour pouvoir être comparé à 0 à l'étape S73.

La figure 10 représente un autre mode de réalisation GNSP3 de la procédure GNSP. La procédure GNSP3 diffère de la procédure GNSP2 en ce qu'elle comprend des optimisations de calcul dans les tests de divisibilité du nombre Pr par les nombres premiers de la liste Q. Ainsi, la procédure GNSP3 comprend une étape supplémentaire S43 exécutée entre les étapes S31 et S32 et une étape supplémentaire S44 exécutée entre les étapes S41 et S40.

A l'étape S43, une procédure UPDG est appelée avec en paramètres d'entrée le nombre premier P, la taille L du nombre Pr (en nombre de bits), la liste Q, la table W et une table de valeurs G.. La table G est prévue pour recevoir les restes Gj des divisions de deux fois le nombre P par chacun des nombres Qj. Le nombre de valeurs dans chaque table W, G correspond au nombre v de nombres premiers dans la liste Q. La procédure UPDG est prévue pour mettre à jour la table G. A l'étape S43, une procédure DVT2 est appelée avec en paramètres d'entrée le nombre Pr, la liste Q, et les tables de valeurs W et G. La procédure DVT2 permet de mettre à jour la table W uniquement par des opérations faisant intervenir de petits nombres, et de tester la divisibilité du nombre candidat premier Pr mis à jour à l'étape S41.

La figure 11 représente des étapes S91 à S96 de la procédure UPDG. A l'étape S91, un indice de boucle j est initialisé à 0. L'étape S92 qui forme le point d'entrée d'une boucle comprenant les étapes S93 à S96, compare l'indice j au nombre v de nombres premiers dans la liste Q. Cette boucle permet de mettre à jour la table G. Si l'indice j est inférieur au nombre v à l'étape S92, une itération de boucle commençant à l'étape S93 est exécutée, sinon l'exécution de la procédure UPDG est terminée. A l'étape S93, il est déterminé si la procédure (GNSP2) ayant appelé la procédure UPDG est appelée pour la première fois par la procédure GNLP, autrement dit, si le nombre P reçu en paramètre d'appel de la procédure GNSP2 a été déterminé par exemple par la procédure INTP. Cette condition peut être déterminée à partir de la taille L du nombre premier P, fourni en paramètre d'appel de la procédure GNSP2, compte tenu du calcul de la taille du premier nombre premier par rapport à la taille maximum LL, effectué par la procédure GNLP (étapes S2 à S4). Si la taille L correspond à celle du premier nombre premier fourni par la procédure INTP, les étapes S94 et S96 sont exécutées, sinon les étapes S95 et S96 sont exécutées. A l'étape S94, la valeur Gj est calculée par la formule suivante :

$$Gj = 2P \bmod Qj \qquad (10)$$

Qj étant un nombre premier de rang j dans la liste Q. A l'étape S95, la valeur Gj est calculée par la formule suivante :

$$Gj = 2Wj \bmod Qj \qquad (11)$$

Wj étant une valeur obtenue précédemment à l'étape S72, ou à une autre étape S84 décrite dans ce qui suit, lors d'un appel précédent de la procédure GNSP2. Les tables W et Q rassemblant les valeurs Wj et Gj qui sont successivement chargées aux étapes S72 et S94 ou S95, sont donc mémorisés dans des variables dites "globales" qui ne sont pas effacées à chaque appel de la procédure GNSP2. La mise en oeuvre de la formule (11) constitue également une simplification de calcul par rapport à la formule (10) exécutée à l'étape S94. En effet, la formule (11) consiste en une division de petits nombres, tandis que la formule (10) consiste en une division d'un grand nombre (2P) par un petit nombre Qj. A l'étape S96, l'indice j est incrémenté de un. L'étape S97 est exécutée après l'étape S96.

Il est à noter que l'étape S72 (figure 9) peut être également simplifiée en calculant d'abord la quantité Rj = R mod Qj, sachant que le nombre R présente une taille inférieure à la moitié du nombre candidat premier Pr. Chacun des nombres Wj de la table W est alors égal à (Gj-Rj + 1) mod Qj, les nombres Rj et Gj étant inférieurs au nombre premier Qj qui peut présenter une taille limitée à 8 ou 16 bits.

La figure 12 représente des étapes S81 à S86 de la procédure DVT2, selon un mode de réalisation. A l'étape S81, un indice de boucle j est initialisé à 0 et une variable booléenne TST est initialisée à "Vrai". L'étape S82 qui forme le point d'entrée d'une boucle comprenant les étapes S83 à S86, compare l'indice j au nombre v de nombres premiers dans la liste Q. Cette boucle permet de tester la divisibilité du nombre Pr par chacun des nombres Qj de la liste Q, lorsque le nombre Pr a été incrémenté de 2P à l'étape S41 de la procédure GNSP2. Cette boucle permet également de mettre à jour la table de valeurs W, compte tenu de la modification du nombre Pr à l'étape S41.

Si l'indice j est inférieur au nombre v à l'étape S82, une itération de boucle commençant à l'étape S83 est exécutée, sinon la procédure DVT2 se termine en fournissant la variable TST. A l'étape S83, la table W à l'indice j est mise à jour par la formule suivante :

$$Wj = Wj + Gj \bmod Qj \qquad (12)$$

ce qui correspond à la formule (9) compte tenu de la mise à jour du nombre Pr effectuée à l'étape S41. La mise en oeuvre de la formule (12) constitue également une simplification de calcul par rapport à la formule (9) exécutée à l'étape S83. En effet, la formule (12) ne comprend qu'une addition de petits nombres, éventuellement suivie d'une soustraction par Qj, tandis que la formule (9) consiste en une division d'un grand nombre (Pr) par un petit nombre (Qj).

A l'étape S84, la valeur Wj est comparée à 0. Si la valeur Wj est nulle, signifiant que le nombre candidat Pr est divisible par le nombre Qj, les étapes S85 et S86 sont exécutées, sinon seulement l'étape S86 est exécutée. A l'étape S85, la variable TST est mise à "Faux", pour indiquer que le nombre Pr n'est pas un nombre premier. A l'étape S86, l'indice j est incrémenté de un. L'étape S82 est exécutée après l'étape S86.

Il est à noter que le choix du nombre v des plus petits nombres premiers utilisés aux étapes S73, S78, S79 et S83 peut également être effectué en fonction de la durée globale d'exécution de la procédure GNLP appelant la procédure GNSP3, sachant que plus on augmente la valeur v, plus la durée d'exécution des procédures DVT1, DVT2 augmente, et plus la durée globale d'exécution des tests effectués à l'étape S36 diminue. Le nombre v peut être choisi à une valeur comprise entre 100 et 200. Il est à noter que le nombre v choisi pour la procédure GNSP3 peut être appliqué à la procédure INTP ou INTP1 exécutée à l'étape S5.

La figure 13 représente un autre mode de réalisation GNSP4 de la procédure GNSP de la figure 3. La procédure GNSP4 permet de ne calculer qu'une fois le quotient U, le nombre entier R étant modifié pour que le quotient U reste impair. La procédure GNSP4 diffère de la procédure GNSP1 de la figure 7 en ce qu'elle comprend des étapes supplémentaires S39, S40, S43' et S44 à S49, l'étape S37 étant supprimée. L'étape S43' est exécutée entre les étapes S31 et 32. Les étapes S39 et S40 sont exécutées successivement après l'étape S34 si le nombre U est impair. Les étapes S45 et S38 sont exécutées successivement après l'étape S34 si le nombre U est pair. A l'étape S43', une procédure d'initialisation UPD1 de la table G est appelée. Cette procédure reçoit comme paramètres le nombre premier P, la taille L du nombre candidat premier Pr courant, et les tables de valeurs W et G. A l'étape S39, la procédure DVT1 est appelée, cette procédure retournant une variable booléenne TST. A l'étape S45 (si le nombre U est pair), le nombre R est incrémenté de P, ce qui correspond à une incrémentation du quotient U de un, qui devient de ce fait impair. A l'étape S38, le nombre R est comparé à la quantité 2I, pour que R reste dans l'intervalle [I + 1, 2I]. Si le nombre R est supérieur à la quantité 2I, l'exécution de la procédure est poursuivie à l'étape S32 pour choisir un nouveau nombre R aléatoirement dans l'intervalle [I + 1, 2I], pour calculer un nouveau nombre candidat premier Pr (étape S35) et tester ce dernier. Si à l'étape S38, le nombre R est inférieur ou égal à la quantité 2I, les étapes S46 et S39 sont exécutées successivement. A l'étape S46, le nombre candidat premier Pr est incrémenté de deux fois le nombre premier P élevé au carré ($2P^2$), ce qui correspond à l'incrémentation de R à l'étape S45, compte tenu de l'équation (1).

A l'étape S40, la variable TST est testée. Si la variable TST est à "Vrai" la procédure PCKT (ou PCKT1) est appelée en retournant la variable TST (étape S36). Si la procédure PCKT appelée à l'étape S36 retourne "Faux", l'étape S40 est exécutée, et dans le cas contraire, le nombre Pr est premier avec certitude et la procédure GNSP4 se termine en fournissant le nombre Pr. Si à l'étape S40, la variable TST est à "Faux", les étapes S47 et S48 sont exécutées. A l'étape S48, le nombre R est incrémenté de deux fois le nombre premier P, ce qui correspond à une incrémentation du quotient U de deux, pour que U reste impair. A l'étape S48, le nombre R est comparé à la quantité 2I, pour que R reste dans l'intervalle [I + 1, 2I]. Si le nombre R est supérieur à la quantité 2I, l'exécution de la procédure est poursuivie à l'étape S32. Dans le cas contraire, les étapes S49, S44 et S40 sont exécutées. A l'étape S49, le nombre candidat premier Pr est incrémenté de quatre fois le nombre premier P élevé au carré, ce qui correspond à l'incrémentation du nombre R à l'étape S47. A l'étape S44, la procédure DVT2 est appelée pour tester la divisibilité du nombre Pr par les nombres premiers de la liste Q en utilisant les tables de valeurs W et G.

De cette manière, les opérations effectuées aux étapes S35 et S33, faisant intervenir de grands nombres ne sont effectuées que lors de l'activation de la procédure GNSP4 et lorsque le nombre R n'est plus dans l'intervalle [I + 1, 2I]. Lorsque le nombre candidat premier Pr est détecté non premier aux étapes S36, S39 et S44, le nombre R est incrémenté de P ou de 2P pour maintenir le quotient U impair et les tests de divisibilité effectués par les procédures DVT1 et DVT2 sont effectués en évitant autant que possible les opérations faisant intervenir de grands nombres comme Pr et P.

La figure 14 représente la procédure UPD1 selon un mode de réalisation. La procédure UPD1 diffère de la procédure UPDG en ce qu'elle comprend des étapes supplémentaires S97 et S98 et en ce que l'étape S94 est remplacée par une étape S94', l'étape S95 étant supprimée. Si à l'étape S93, la taille L correspond à celle du premier nombre premier fourni par la procédure INTP, les étapes S97, S94' et S96 sont exécutées, sinon les étapes S98, S94' et S96 sont exécutées. A l'étape S97, une variable B reçoit le reste de la division du nombre P par le nombre premier Qj de rand j de la liste Q. A l'étape S98, la variable B reçoit le nombre Wj figurant à l'indice j dans la table de valeurs W obtenues précédemment lors d'un appel précédent de la procédure DVT1 ou DVT2. A l'étape S94', la valeur Gj à l'indice j dans la table G est calculée par la formule suivante :

$$Gj = (2B)^2 \bmod Qj \qquad (13)$$

Qj étant un nombre premier de rang j dans la liste Q.

La mise en oeuvre de la formule (13) constitue également une simplification de calcul par rapport à la formule (10) exécutée à l'étape S94. En effet, la formule (13) consiste en une division de petits nombres.

La figure 15 représente un autre mode de réalisation GNSP5 de la procédure GNSP de la figure 3. La procédure GNSP5 diffère de la procédure GNSP4 de la figure 13 en ce qu'elle comprend des étapes supplémentaires S50 à S60, les étapes S47 à S49 étant supprimées, et l'étape S43' étant remplacée par une étape S43". A l'étape S50 qui est exécutée entre les étapes S33 et S34, une variable S reçoit le reste de la division entière du nombre R par le nombre premier P. A l'étape S43", une procédure de mise à jour UPD2 est appelée pour mettre à jour la table G, ainsi qu'une table supplémentaire H. Cette procédure reçoit comme paramètres le nombre premier P, la taille L du nombre candidat premier Pr courant, et les tables de valeurs W, G et H.

A l'étape S51 qui est exécutée après l'étape S40 si la variable TST est à "Faux", le reste S est comparé au nombre P. Si le reste S est égal au nombre P décrémenté de un, les étapes S53 et S57 sont exécutées. Si le reste S est inférieur au nombre P décrémenté de un, les étapes S52 et S54 sont exécutées. A l'étape S52, le nombre R est incrémenté de un. A l'étape S53, le nombre R est incrémenté du nombre entier P et de un. Aux étapes S54 et S57, le nombre R est comparé à la quantité 2I. Si aux étapes S54 et S57, le nombre R est supérieur à la quantité 2I, l'exécution de la procédure GNSP5 est poursuivie à l'étape S32. Si à l'étape S54, le nombre R est inférieur à la quantité 2I, les étapes S55, S56, S44 et S40 sont exécutées. A l'étape S55, le reste S est incrémenté de un, ce qui correspond à l'incrémentation du nombre R à l'étape S54. A l'étape S57, le nombre candidat premier Pr est incrémenté de deux fois le nombre P, ce qui correspond à l'incrémentation du nombre R à l'étape S52, compte tenu de l'équation (1). A l'étape S43, la procédure DVT2 est appelée.

Si à l'étape S57, le nombre R est inférieur à la quantité 2I, les étapes S58 à S60, puis S40 sont exécutées. A l'étape S58, le reste S est mis à 0. A l'étape S59, le nombre candidat premier Pr est incrémenté de deux fois le nombre P et de deux fois ce nombre élevé au carré, ce qui correspond à l'incrémentation du nombre R à l'étape S55, compte tenu de l'équation (1). A l'étape S60, une procédure DVT3 est appelée avec en paramètres les tables Q, W, G et H. La procédure DVT3 retourne une valeur booléenne qui est chargée dans la variable TST et dont la valeur indique si le nombre candidat premier Pr est ou non divisible par l'un des nombres premiers de la liste Q.

La figure 16 représente la procédure UPD2 selon un mode de réalisation. La procédure UPD2 diffère de la procédure UPD1 en ce qu'elle reçoit en paramètre d'entrée en outre la table H, en ce que l'étape S94' est remplacée par une étape S94" et en ce qu'elle comprend une étape supplémentaire S99. A l'étape S94", la valeur Gj d'indice j dans la table G reçoit deux fois la valeur B modulo le nombre premier Qj d'indice j dans la liste Q. A l'étape S99 qui est exécutée entre les étapes S94" et S96, la valeur Hj d'indice j dans la table H reçoit la valeur B multipliée par la valeur Gj modulo le nombre Qj.

La figure 17 représente des étapes de la procédure DVT3, selon un mode de réalisation. La procédure DVT3 diffère de la procédure DVT2 en ce que l'étape S83 est remplacée par l'étape S83'. A l'étape S83', la valeur à l'indice j dans la table W est mise à jour par la formule suivante :

$$Wj = (Wj + Gj + Hj) \bmod Qj \qquad (14)$$

ce qui correspond à la mise à jour du nombre candidat premier Pr effectuée à l'étape S60. La mise en oeuvre de la formule (14) constitue également une simplification de calcul par rapport à la formule (9) exécutée à l'étape S72 (figure 9). En effet, la formule (14) ne comprend que deux additions de petits nombres, éventuellement suivies d'une soustraction du nombre Qj, tandis que la formule (9) consiste en une division du grand nombre Pr par le nombre Qj.

La figure 18 représente des étapes S101 à S115 d'une procédure GNSP6 qui peut être appelée à l'étape S9 (figure 1), selon un mode de réalisation. Les étapes S101 à S108 permettent de générer un nombre R tel que le candidat premier Pr obtenu par la formule (1) n'est pas divisible par les petits nombres premiers de la liste Q, au lieu de choisir un nombre R pour calculer un nombre candidat premier Pr à l'aide de la formule (1), et tester la divisibilité du nombre Pr par les nombres premiers de la liste Q. A cet effet, on se base sur la proposition suivante :

*Pour tout nombre c appartenant à l'ensemble Z/nZ, Z étant l'ensemble des entiers relatifs et Z/nZ étant l'ensemble des résidus modulo n, l'équation $x^{\lambda n} = 1 \bmod n$ est vérifiée si et seulement si x appartient à (Z/nZ)*,*

*c'est-à-dire si GCD(x, n) = 1, λn étant l'indicateur de Carmichael, c'est-à-dire le plus petit entier non nul tel que pour tout nombre x appartenant à (Z/nZ)*, $x^{\lambda n} = 1 \bmod n$.*

En choisissant comme valeur de n, le produit Πv des v premiers nombres premiers supérieurs à 2 (2 non compris), il est possible de générer directement (par une séquence d'étapes linéaire par opposition à une séquence itérative) un nombre qui est premier avec tous les diviseurs du produit Πv, c'est-à-dire tous les nombres premiers formant le produit Πv. La proposition précédente nécessite simplement une élévation à la puissance λΠv, et donc de mémoriser ce nombre ainsi que le produit Πv. Pour mettre en oeuvre cette proposition, il convient de générer un élément inversible de l'ensemble (Z/ΠvZ)*, c'est-à-dire un nombre x tel que :

$$x^{\lambda\Pi v} = 1 \bmod \Pi v. \qquad (15)$$

Dans l'optique de l'application de la formule (1), la quantité 2P(X+Z·Πv) ne présente pas non plus de diviseur commun avec le produit·Πv, Z étant un nombre entier. Il suffit donc de choisir comme nombre candidat premier Pr la quantité 2P(X+Z·Πv). Il en résulte que le nombre entier R dans la formule (1) est choisi égal à :

$$R = X - ((2P)^{-1} \bmod \Pi v) + Z \cdot \Pi v \qquad (16)$$

le nombre Z étant choisi de manière à ce que le nombre R ait une taille telle que le nombre candidat premier Pr ait la taille L calculée à l'étape S8.

Les étapes S101 à S108 de la procédure GNSP sont exécutées successivement. A l'étape S101, un nombre I est calculé par la formule suivante :

$$I = \left\lfloor \frac{2^{L-1}}{2P} \right\rfloor \qquad (17)$$

P étant un nombre premier, L étant la taille d'un nouveau nombre premier à générer, P et L étant reçus en paramètres d'entrée de la procédure GNSP, et $\left\lfloor \frac{x}{y} \right\rfloor$ représentant le quotient de la division entière de x par y. A l'étape S82, un nombre I est calculé par la formule suivante :

$$J = \left\lfloor \frac{I}{\Pi v} \right\rfloor \qquad (18)$$

A l'étape S103, est généré un nombre inversible X de l'ensemble (Z/ΠvZ)*. A cet effet, une procédure GINV est appelée avec en paramètres d'entrée le produit Πv et le nombre λΠv. La procédure GINV fournit un nombre inversible X.

Les étapes S104 à S110 permettent de calculer le nombre R. A l'étape S104, est calculé un nombre I2P qui est égal au nombre inverse modulo le produit Πv, de deux fois le nombre premier P, soit ($(2P)^{-1}$ mod Πv). A l'étape S105, est calculé un nombre R égal au nombre X moins le nombre inverse I2P modulo le produit Πv. l'étape S106, un nombre Z est choisi dans l'intervalle [J, 2J-1] à l'aide d'une fonction aléatoire ou pseudo-aléatoire RND. A l'étape S107, le nombre R est incrémenté de la quantité Z·Πv. Aux étapes S108 à S110, on s'assure que le nombre R obtenu à l'étape S107 est compris dans l'intervalle [I+1,2I], Ainsi, aux étapes S108 et S109, le nombre R est comparé aux nombres I+1 et 2I. Si le nombre R est inférieur à I+1, les étapes S110 et S111 sont exécutées. Si le nombre R est supérieur à 2I, les étapes S106 à S108 sont à nouveau exécutées. Si le nombre R est compris entre I+1 et 2I, seulement l'étape S111 est exécutée. A l'étape S110, le nombre R est incrémenté de la quantité·Πv.

Les étapes suivantes S111 et S112 mettent en oeuvre le test (ii) du théorème énoncé précédemment, sachant que le test (i) est mis en oeuvre par l'étape S114. A l'étape S111, le quotient U de la division entière du nombre R par le nombre P est calculé. A l'étape S112, si le quotient U est pair, l'étape S115 est exécutée pour générer une nouvelle valeur de X. La procédure GNSP6 est ensuite poursuivie à l'étape S105 pour générer une nouvelle valeur de R, sinon l'étape S113 est exécutée.

A l'étape S113, un nombre candidat premier Pr est calculé à l'aide de la formule (1). A l'étape S114, la procédure d'application du test de Pocklington PCKT (ou PCKT1) est appelée. Cette procédure reçoit le nombre Pr à tester et le nombre R utilisé pour calculer le nombre Pr à l'étape S113, ainsi qu'optionnellement la taille L en nombre de bits du nombre Pr. Si la procédure PCKT retourne "Vrai", le nombre Pr est premier et la procédure GNSP6 se termine en fournissant le nombre Pr. Si la procédure PCKT retourne "Faux", l'étape S115 est exécutée et l'exécution de la procédure est poursuivie à l'étape S105. A l'étape S115, le nombre X est multiplié par un nombre modulo le produit Πv, ce nombre étant non divisible par l'un des nombres Qj formant le produit Πv, par exemple égal à 2.

Un procédé de génération de nombres inversibles est décrit dans le document [7]. La figure 19 représente des étapes S121 à S123 de la procédure de génération d'un nombre inversible GINV, selon un mode de réalisation. La procédure GINV permet de générer un élément inversible de l'ensemble (Z/ΠvZ)* par un procédé itératif. A l'étape S121, un nombre de taille I inférieur au produit Πv est choisi à l'aide d'une fonction aléatoire ou pseudo-aléatoire. A l'étape S122, il est testé si le nombre X choisi à l'étape S121 vérifie l'équation (15), c'est-à-dire si le nombre X est inversible dans l'ensemble (Z/ΠvZ)*. Si le nombre X vérifie l'équation (15), la procédure GINV se termine en fournissant le nombre X, sinon l'étape S123 est exécutée. A l'étape S123, le nombre X est incrémenté de 1. Les étapes S122 et S123 forment donc une boucle de traitement qui est exécutée jusqu'à ce que la condition de l'étape S122 soit satisfaite.

La figure 20 représente un autre mode de réalisation GINV1 de la procédure GINV. La procédure GINV1 diffère de la procédure GINV en ce que les étapes S122 et S123 sont remplacées par des étapes S124 à S127. A l'étape S124, un nombre Y est calculé par l'équation suivante :

$$Y = 1 - X^{\lambda\Pi v} \bmod \Pi v. \qquad (19)$$

A l'étape S125, le nombre Y est comparé à 0, et s'il est nul, le nombre X vérifie l'équation (15). La procédure GINV1 se termine alors en fournissant le nombre X. Dans le cas contraire, les étapes S126, S127 sont exécutées et l'exécution de la procédure GINV1 est poursuivie à l'étape S124. A l'étape S126, un nombre B inférieur au produit Πv est choisi aléatoirement à l'étape S126. A l'étape S127, le nombre X est incrémenté du produit des nombres B et Y. L'exécution de la procédure GINV1 est ensuite poursuivie à l'étape S14 pour tester si le nombre X vérifie l'équation (15).

La figure 21 représente un autre mode de réalisation GNSP7 de la procédure GNSP6. La procédure GNSP7 est configurée pour générer un nombre entier R qui non seulement n'est pas divisible par les diviseurs du produit Πv, mais également qui vérifie la condition que le quotient U de la division entière du nombre R par le nombre premier P soit impair. A cet effet, on se base sur la propriété selon laquelle le nombre R et le reste S de la division entière du nombre R par le nombre P sont de parités opposées si et seulement si le quotient U de la division entière de R par P est impair. La procédure GNSP7 choisit donc aléatoirement le reste S impair et bien sûr inférieur au nombre P. Il suffit ensuite de s'assurer que le nombre entier R obtenu est pair pour que le quotient U soit impair. Pour cela le nombre R est généré en faisant appel au théorème des restes chinois. Il s'agit en effet de trouver un nombre R qui vérifie simultanément les équations suivantes :

$$R = X - 1/(2P) \bmod \Pi v \qquad (20)$$

$$R = S \bmod P \qquad (21)$$

$$R = 0 \bmod 2 \qquad (22)$$

Ce problème peut être résolu par l'algorithme de Garner ou l'algorithme de Gauss. Par l'algorithme de Garner, en calculant un nombre K et le nombre R par les formules suivantes :

$$K = (((X - (2P)^{-1} - S)/P) \bmod \Pi v)\cdot P + S, \qquad (23)$$

$$R = K + (K \bmod 2)\cdot P\cdot \Pi v. \qquad (24)$$

La procédure GNSP7 diffère de la procédure GNSP6 en ce que les étapes S111 et S112 ont été supprimées et remplacées par des étapes S116 à S119, et les étapes S102, S107 et S110 sont remplacées par des étapes S102', S107' et S110'. L'étape S113 de calcul d'un nouveau nombre candidat premier Pr est exécutée immédiatement après l'étape S109 ou S110. A l'étape S102', le nombre J est calculé en prenant la partie entière de la division du nombre I par deux fois le nombre premier P et par le produit $\Pi v$. Les étapes S116 à S119 sont exécutées successivement entre les étapes S104 et S106. A l'étape S116, un nombre entier S inférieur au nombre P et impair est choisi à l'aide d'une fonction aléatoire ou pseudo-aléatoire RND. Aux étapes S117 et S118, un nombre entier K est calculé par la formule (23). A l'étape S119, le nombre entier R est calculé par la formule (24).

A l'étape S107', la quantité $2P\cdot Z\cdot \Pi v$ est ajoutée au nombre R pour que ce dernier soit compris dans l'intervalle [I+1,2I] sans changer sa parité. A l'étape S108, si le nombre R n'est pas supérieur ou égal à I+1, la quantité $2P\cdot \Pi v$ est ajoutée au nombre R à l'étape S110'. L'exécution de la procédure GNSP7 est poursuivie à l'étape S117 après l'étape S115.

Selon un mode de réalisation, des procédures différentes de génération d'un nombre premier peuvent être appelées à l'étape S9 de la procédure GNLP, en fonction de l'itération. Ainsi, l'une des procédures GNSP, GNSP1 à GNSP5 peut être appelée lors des premières itérations de la procédure GNLP, et l'une des procédures GNSP6 et GNSP7 est appelée lors des dernières itérations.

La figure 22 représente un exemple de dispositif électronique DV dans lequel les divers modes de réalisation du procédé de génération de nombre premier décrits précédemment peuvent être mis en oeuvre. Le dispositif DV peut être un circuit intégré sur microplaquette de semiconducteur, formant de manière générale un microprocesseur. La microplaquette peut par exemple être agencée sur un support tel qu'une carte en plastique, l'ensemble formant une carte à puce.

Le dispositif DV comprend une unité de traitement UC, un bloc de calcul cryptographique CRU, et une ou plusieurs mémoires MEM pouvant comprendre une mémoire volatile et une mémoire non volatile. Le dispositif électronique DV comprend également une interface de communication IOI à contact ou sans contact, par exemple un circuit RF ou UHF fonctionnant par couplage inductif ou par couplage électrique. Le bloc CRU peut être un coprocesseur équipé d'une unité centrale de commande programmable de type machine d'état, un coprocesseur entièrement hardware, ou des sous-programmes exécutés par l'unité UC.

Selon un mode de réalisation, le bloc de calcul CRU peut être configuré pour effectuer sur demande de l'unité UC des multiplications de nombres de grande taille, par exemple de taille comprise entre 32 bits et 2048 bits, et en particulier celle effectuée aux étapes S35 et S114 des procédures GNSP, GNSP1 à GNSP6, ainsi que celles intervenant dans les calculs d'exponentiation modulaire des tests de Fermat et de Miller-Rabin exécutés dans les procédures INTP, INTP1, et du test de Pocklington exécuté dans les procédures PCKT et PCKT1.

Selon un autre mode de réalisation, le bloc de calcul peut également être configuré pour effectuer sur demande de l'unité de traitement UC, directement les opérations d'exponentiation modulaire des tests de Fermat et de Miller-Rabin exécutés dans les procédures INTP, INTP1, et du test de Pocklington exécuté dans les procédures PCKT et PCKT1.

Le dispositif DV peut également comprendre un générateur RGN aléatoire ou pseudo-aléatoire de mots binaires de M bits pour réaliser les étapes S21, S32, S52, S103 et S121.

L'unité UC peut ainsi comprendre un module de génération de nombres premiers PGN mettant en oeuvre la procédure GNLP appelant l'une et/ou l'autre des procédures GNSP, GNSP1 à GNSP6. L'unité UC peut également comprendre un module de génération de données cryptographiques KGN telles que des clés cryptographiques, et des modules de signature SGN et de chiffrement ENC utilisant des données cryptographiques générées par le module KGN. Chacun des modules PGN, KGN, ENC, SGN peut faire appel au bloc CRU pour effectuer des opérations complexes, telles que des multiplications de nombres de grandes tailles ou des exponentiations modulaires. Les données cryptographiques générées sont mémorisées dans la mémoire MEM.

Les modules KGN, SGN et ENC peuvent par exemple mettre en oeuvre l'algorithme RSA en générant deux nombres premiers de 512 ou 1024 bits à l'aide du module PGN. La figure 23 représente une procédure KGEN1 de génération d'une paire de clés secrète et publique, conforme à l'algorithme RSA, exécutée par le module KGN. La procédure KGEN1 comprend des étapes S141 à S146. Aux étapes S141 et S142, deux nombres premiers P et Q sont générés à l'aide d'une procédure PRGN recevant en paramètre d'entrée la taille L des nombres premiers à générer. La procédure PRGN correspond à l'une des procédures GNLP, GNLP1, GNM, GNST exécutée par le module PGN. A l'étape S143, les nombres P et Q sont multipliés l'un par l'autre pour obtenir un nombre N. A l'étape S144, un nombre impair E est choisi aléatoirement dans un certain intervalle, par exemple entre $2^{16}$ et $2^{256}$. A l'étape S145, si le nombre E choisi est divisible par la quantité (P-1)(Q-1), un nouveau nombre E est choisi à l'étape S144, sinon l'étape S146 est exécutée pour choisir un nombre D tel que E x D est égal à 1 modulo (P-1)(Q-1). La procédure KGEN1 se termine après l'étape S146 en fournissant en tant que clé privée la paire de nombres (N,D) et en tant que clé publique la paire de nombres (N,E).

L'algorithme DSA peut également être mis en oeuvre par les modules KGN, SGN et ENC, en générant deux nombres premiers de tailles différentes, par exemple 256 et 2048 bits. La figure 24 représente une procédure KGEN2 de génération d'une paire de clés secrète et publique, conforme à l'algorithme DSA, exécutée par le module KGN. La procédure KGEN2 comprend des étapes S151 à S155. Aux étapes S151 et S152, deux nombres premiers P et Q sont générés à l'aide d'une procédure PRGN recevant en paramètre d'entrée, successivement les tailles L1, L2 des nombres premiers P et Q à générer. Les tailles L1 et L2 sont par exemple égales, respectivement à 2048 et à 256. A l'étape S153, une procédure GGEN est appelée pour générer un nombre G qui constitue un nombre générateur du sous groupe d'ordre Q modulo P. A l'étape S154, une clé secrète SK est choisie aléatoirement dans l'intervalle [1, Q-1]. A l'étape S155, une clé publique PK est calculée en élevant le nombre G à la puissance SK modulo P. La procédure KGEN2 se termine après l'étape S155 en fournissant la paire de clés privée et publique (SK, PK).

Il apparaîtra clairement à l'homme de l'art que la présente invention est susceptible de diverses variantes de réalisation et diverses applications, notamment diverses autres formes d'algorithmes et de dispositifs mettant en oeuvre de tels algorithmes.

L'invention n'est pas non plus limitée à un procédé itératif de génération d'un grand nombre premier. En effet, il peut être envisagé de mémoriser un nombre premier ayant une taille sensiblement égale à la moitié ou au tiers des nombres premiers à générer et de n'exécuter qu'une seule itération correspondant à l'exécution de l'une des procédures GNSP et GNSP1 à GNSP7. Par rapport à la solution consistant à directement mémoriser un nombre premier utilisable pour générer des clés cryptographiques, cette solution présente un gain en terme de capacité de stockage égal à la moitié ou aux deux tiers de la taille des nombres premiers utilisés. Cette solution présente également un avantage en termes de sécurité et de confidentialité, puisqu'il n'est pas possible de connaître à l'avance le ou les nombres premiers qui seront utilisés pour générer les clés cryptographiques. En effet, même si le nombre premier précédent est fixé, le choix aléatoire du nombre entier R permet d'obtenir en une seule itération la plupart des nombres premiers ayant la taille souhaitée.

Liste des publications précédemment citées :


[1] C. Pomerance, C. Selfridge, and J.L. Wagstaff. "The pseudoprimes to 25x10e9", Mathematics of Computation, 35:1003-1026, 1990.

[2] G. Jaeschke, "On strong pseudoprimes to several bases", Mathematics of Computation, 61:915-926, 1993.

[3] U. M. Maurer, "Fast generation of prime numbers and secure public-key cryptographie parameters", J. Cryptology, 8(3):123-155, 1995.

[4] J. Shawe-Taylor, "Generating strong primes", Electronic Letters, 22(16):875-877, 1986.

[5] FIPS PUB 186-3, "Digital Signature Standard", National Institute of Standards and Technology, october 2009.

[6] J. Brillhart, D. H. Lehmer, J. L. Selfridge, B. Tuckerman, and Jr. S. S. Wagstaff, "Factorization of bn ± 1, b = 2; 3; 5; 7; 10; 11; 12 Up to High Powers", vol. 22, American Mathematical Society, 1988.

[7] M. Joye, P. Paillier, S. Vaudenay, "Génération of Prime Numbers", CHES 2000, p. 340-354


## Revendications

**1.** Procédé de cryptographie mis en oeuvre dans un dispositif électronique (DV), le procédé comprenant des étapes consistant à :

a- générer un nombre premier (P),
b- choisir un premier nombre entier (R),

c- générer un nombre candidat premier (Pr) ayant un nombre de bits souhaité (L), par la formule suivante :

$$Pr = 2P \cdot R + 1$$

dans laquelle Pr est le nombre candidat premier, P est le nombre premier ayant un nombre de bits inférieur au nombre de bits souhaité du nombre candidat premier, et R est le premier nombre entier,
d- appliquer au nombre candidat premier un premier test de primalité comprenant le calcul d'un second nombre entier ($A^{2R}$) obtenu en élevant un troisième nombre entier (A) à la puissance deux fois le premier nombre entier (R), le nombre candidat premier (Pr) étant premier s'il ne présente pas de diviseur commun avec le second nombre entier ($A^{2R}$) décrémenté de un ($GCD(A^{2R} -1, Pr) =1$), et si le résultat du troisième nombre entier (A) élevé à la puissance le nombre candidat premier (Pr) décrémenté de un, est égal à 1 modulo le nombre candidat premier ($A^{Pr-1} = 1 \bmod Pr$),
e- si le nombre candidat premier réussit le premier test de primalité, fournir le nombre candidat premier en tant que nombre premier prouvé, sinon répéter les étapes b- à e-, et
f- générer une donnée cryptographique à partir du nombre premier prouvé fourni,

**caractérisé en ce que** le nombre de bits souhaité (L) du nombre candidat premier (Pr) est égal à trois fois le nombre de bits du nombre premier (P), à une unité près, le procédé comprenant, avant l'application du premier test de primalité, des étapes consistant à calculer un quotient (U) d'une division entière du premier nombre entier (R) par le nombre premier, le premier nombre entier étant inférieur au carré du nombre premier incrémenté de un, et répéter l'étape b- si le quotient est pair, et le troisième nombre entier (A) est compris entre 2 et le nombre candidat premier décrémenté de 2.

**2.** Procédé selon la revendication 1, dans lequel, si le quotient (U) est pair ou si le nombre candidat premier (Pr) ne réussit pas le premier test de Primalité, le procédé comprend des étapes consistant à :

incrémenter le premier nombre entier (R) de un ou d'une certaine quantité selon la parité du quotient (U) pour qu'un nouveau quotient calculé à partir de la valeur de R incrémentée soit impair,
modifier le nombre candidat premier (Pr) en lui ajoutant deux fois le nombre premier (P), et
appliquer le premier test de primalité au nombre candidat premier modifié.

**3.** Procédé selon l'une des revendications 1 à 2, comprenant une étape de test de la divisibilité du nombre candidat premier (Pr) par des petits nombres premiers (Qj), le nombre candidat premier généré n'étant retenu comme nombre candidat premier que s'il n'est pas divisible par les petits nombres premiers.

**4.** Procédé selon l'une des revendications 1 à 3, comprenant plusieurs étapes de génération d'un nouveau nombre premier, une première étape de génération fournissant un nombre premier à partir d'un premier nombre premier, chaque étape de génération suivante fournissant un nombre premier à partir du nombre premier obtenu à l'étape de génération précédente, jusqu'à obtenir un nombre premier formé d'un nombre de bits souhaité, chaque étape de génération comprenant les étapes de génération d'un nombre candidat premier et d'application du premier test de Primalité au nombre candidat premier.

**5.** Procédé selon la revendication 4, comprenant des étapes consistant à :

mémoriser en tant que premiers restes, les restes (Wj) des divisions entières du nombre candidat premier (Pr) par chacun des petits nombres premiers (Qj), le nombre candidat premier étant divisible par l'un des petits nombres premiers si le reste correspondant est nul,
mémoriser en tant que second restes, les restes (Gj, Hj) des divisions entières de deux fois le nombre premier (P) par chacun des petits nombres premiers (Qj), et
si un nouveau nombre candidat premier est calculé à partir du nombre candidat premier en lui ajoutant deux fois le nombre premier (P), mettre à jour chacun des premiers restes (Wj) en lui ajoutant respectivement le second reste (Gj) correspondant au même petit nombre premier.

**6.** Procédé selon la revendication 5, dans lequel chaque étape de génération suivante d'un nombre premier comprend des étapes consistant à :

choisir aléatoirement un nouveau premier nombre entier (R), et
mettre à jour chacun des seconds restes (Gj) avec le double du premier reste (Wj) correspondant au même petit nombre premier (Qj), obtenu lors de l'étape de génération précédente.

**7.** Procédé selon l'une des revendications 1 à 6, dans lequel le premier nombre entier (R) est choisi :

aléatoirement dans l'intervalle [I+1, 2I] avec :

$$I = \left\lfloor \frac{2^{L-1}}{2P} \right\rfloor$$

L étant le nombre de bits souhaité du nouveau nombre premier à générer,
et/ou de manière à être pair et à ce que le reste (S) de sa division entière par le premier nombre premier (P) soit impair, pour que le quotient (U) soit impair.

**8.** Procédé selon la revendication 1, comprenant des étapes de calcul du premier nombre entier (R) à partir d'un nombre inversible (X) appartenant à un ensemble d'éléments inversibles modulo un produit (Πv) de nombres (Qj) appartenant à un groupe de petits nombres premiers supérieurs à 2, afin que le nombre candidat premier (Pr) ne soit divisible par aucun des nombres du groupe, le nombre premier (P) ayant un nombre de bits égal à un bit près au tiers du nombre de bits souhaité du nombre candidat premier.

**9.** Procédé selon la revendication 8, dans lequel le premier nombre entier (R) est choisi :

soit égal à :

$$R = X - ((2P)^{-1} \bmod \Pi v) + Z \cdot \Pi v,$$

X étant un nombre inversible modulo le produit (Πv) des nombres premiers (Qj) du groupe, P étant le nombre premier, et Z étant un nombre entier choisi de manière à ce que le premier nombre entier R ait une taille telle que le nombre candidat premier (Pr) ait le nombre de bits souhaité,
soit égal à :

$$R = K + (K \bmod 2)P \cdot \Pi v + 2P \cdot Z \cdot \Pi v,$$

avec $K = (((X - (2P)^{-1} - S)/P) \bmod \Pi v)P+S$, S étant le reste de la division entière du premier nombre entier R par le nombre premier P, X étant un nombre inversible modulo le produit Πv des nombres premiers (Qj) du groupe, P étant le nombre premier, et Z étant un quatrième nombre entier choisi de manière à ce que le nombre R ait une taille telle que le nombre candidat premier (Pr) ait le nombre de bits souhaité.

**10.** Procédé selon la revendication 8 ou 9, dans lequel si le nombre candidat premier (Pr) ne réussit pas le premier test de primalité, il comprend des étapes de génération d'un nouveau nombre candidat premier en ajoutant au nombre candidat premier (Pr) un multiple du nombre inversible (X) modulo le produit (Πv), le multiple étant non divisible par l'un des nombres formant le produit, et d'application du premier test de primalité au nouveau nombre candidat premier.

**11.** Procédé selon l'une des revendications 8 à 10, dans lequel le nombre inversible (X) est :

soit généré en recherchant un nombre candidat inversible X inférieur au produit Πv vérifiant l'équation suivante :

$$X^{\lambda \Pi v} = 1 \bmod \Pi v,$$

λΠv étant l'indicateur de Carmichael de l'ensemble des éléments inversibles modulo le produit Πv,
soit choisi aléatoirement à une valeur inférieure au produit Πv et incrémenté de un ou de la quantité $B \cdot (1 - X^{\lambda \Pi v}$

mod Πv) jusqu'à ce qu'il vérifie l'équation :

$$X^{\lambda\Pi v} = 1 \bmod \Pi v,$$

B étant un cinquième nombre entier choisi aléatoirement entre un et le produit Πv.

**12.** Procédé selon la revendication 11, dans lequel la génération du premier nombre premier (Pr) comprend des étapes consistant à :

choisir aléatoirement un nombre (P) formé du nombre réduit de bits, et
appliquer au nombre choisi un ensemble limité de tests de Miller-Rabin ($MR_A$, A = 2, 7, 61 ; 3, 5, 7, 11, 13, 17) en différentes bases (A), jusqu'à ce que le nombre choisi passe avec succès l'ensemble de tests de Miller-Rabin, le nombre de bits maximum et les valeurs des bases étant choisis pour prouver la primalité du premier nombre premier, les tests de Miller-Rabin ($MR_A$) appliqués au nombre (P) choisi aléatoirement, pouvant être effectués en bases 2, 7 et 61 avec un nombre de bits maximum (LL) choisi inférieur ou égal à 32, ou bien en bases 2, 3, 5, 7, 11, 13 et 17, avec un nombre de bits maximum (LL) choisi inférieur ou égal à 48.

**13.** Procédé selon l'une des revendications 1 à 12, comprenant une étape de génération d'une clé cryptographique à partir du nombre premier prouvé fourni.

**14.** Dispositif électronique comprenant un bloc de calcul (CRU) pour exécuter des multiplications de nombres de grande taille et/ou des opérations d'exponentiation modulaire,
**caractérisé en ce qu'**il est configuré pour mettre en oeuvre le procédé selon l'une des revendications 1 à 13.

**15.** Circuit intégré sur microplaquette de semiconducteur, comprenant un dispositif selon la revendication 14.

**Patentansprüche**

**1.** Kryptographisches Verfahren, das in einer elektronischen Vorrichtung (*dispositif électronique*- DV) implementiert ist, wobei das Verfahren die folgenden Schritte umfasst:

a- Erzeugen einer Primzahl (P),
b- Auswählen einer ersten ganzen Zahl (R),
c- Erzeugen eines Primzahlkandidaten (Pr) mit einer gewünschten Anzahl von Bits (L), gemäß der folgenden Formel:

$$Pr = 2P \cdot R + 1$$

wobei Pr der Primzahlkandidat ist, P die Primzahl mit einer Anzahl von Bits ist, die kleiner als die gewünschte Anzahl von Bits des Primzahlkandidaten ist, und R die erste ganze Zahl ist,
d- Anwenden eines ersten Primzahltests auf den Primzahlkandidaten, umfassend das Berechnen einer zweiten ganzen Zahl ($A^{2R}$), die durch ein Erhöhen einer dritten ganzen Zahl (A) auf die doppelte Leistung der ersten ganzen Zahl (R) erhalten wird, wobei der Primzahlkandidat (Pr) primär ist, wenn er keinen gemeinsamen Teiler mit der zweiten ganzen Zahl ($A^{2R}$) um eins erniedrigt (GCD($A^{2R}$-1, Pr) =1) darstellt, und wenn das Ergebnis der dritten ganzen Zahl (A), die auf die um eins verringerte Leistung des Primzahlkandidaten (Pr) erhöht wird, 1 Modulo gleich dem Primzahlkandidaten ($A^{Pr-1}$= 1 mod Pr) ist,
e- wenn der Primzahlkandidat den ersten Primzahltest besteht, Eingeben des Primzahlkandidaten als nachgewiesene Primzahl, ansonsten Wiederholen der Schritte b- bis e-, und
f- Erzeugen von kryptographischen Daten auf Grundlage der nachgewiesenen eingegeben Primzahl, **dadurch gekennzeichnet, dass** die gewünschte Anzahl von Bits (L) des Primzahlkandidaten (Pr) gleich dem Dreifachen der Anzahl von Bits der Primzahl (P) bis zu einer nächstgelegenen Einheit ist, wobei das Verfahren vor der Anwendung des Primzahltests die Schritte umfasst, die aus dem Berechnen eines Quotienten (U) einer ganzzahligen Division der ersten ganzen Zahl (R) durch die Primzahl, wobei die erste ganze Zahl kleiner als die Quadratwurzel der um eins inkrementierten ersten Zahl ist, und dem Wiederholen des Schritts b- bestehen, wenn der Quotient gerade ist und die dritte ganze Zahl (A) zwischen 2 und dem um 2 verringerten Primzahlkandidaten liegt.

**2.** Verfahren nach Anspruch 1, wobei, wenn der Quotient (U) gerade ist oder der Primzahlkandidat (Pr) den ersten Primzahltest nicht besteht, das Verfahren die Schritte umfasst, die aus Folgendem bestehen:
Inkrementieren der ersten ganzen Zahl (R) um eins oder einen bestimmten Betrag gemäß der Parität des Quotienten (U), sodass ein neuer Quotient, der auf Grundlage des Inkrementwerts von R berechnet wird, ungerade ist, Modifizieren des Primzahlkandidaten (Pr), indem ihm zweimal die Primzahl (P) hinzugefügt wird, und Anwenden des ersten Primzahltests auf die modifizierte Primzahlkandidat.

**3.** Verfahren nach einem der Ansprüche 1 bis 2, umfassend einen Schritt des Testens der Teilbarkeit des Primzahlkandidaten (Pr) durch kleine Primzahlen (Qj), wobei der erzeugte Primzahlkandidat nur dann als Primzahlkandidat erhalten bleibt, wenn er nicht durch die kleinen Primzahlen teilbar ist.

**4.** Verfahren nach einem der Ansprüche 1 bis 3, umfassend mehrere Erzeugungsschritte einer neuen Primzahl, einen ersten Erzeugungsschritt zum Eingeben einer Primzahl auf Grundlage einer ersten Primzahl, wobei jeder nachfolgende Erzeugungsschritt eine erste Zahl auf Grundlage der im vorherigen Erzeugungsschritt erhaltenen Primzahl eingibt, bis eine Primzahl, die aus einer gewünschten Anzahl von Bits ausgebildet wird, erhalten wird, wobei jeder Erzeugungsschritt die Erzeugungsschritte eines Primzahlkandidaten und die Anwendung des Primzahltests auf den Primzahlkandidaten umfasst.

**5.** Verfahren nach Anspruch 4, umfassend die Schritte, die aus Folgendem bestehen:
Speichern als erste Reste die Reste (Wj) der gesamten Divisionen des Primzahlkandidaten (Pr) durch jede der kleinen Primzahlen (Qj), wobei der Primzahlkandidat durch eine der kleinen Primzahlen teilbar ist, wenn der entsprechende Rest Null ist, Speichern als zweite Reste die Reste (Gj, Hj) der gesamten Divisionen von zweimal der Primzahl (P) durch jede der kleinen Primzahlen (Qj), und wenn ein neuer Primzahlkandidat auf Grundlage des Primzahlkandidaten berechnet wird, indem ihm zweimal die Primzahl (P) hinzugefügt wird, Aktualisieren jedes der ersten Reste (Wj), indem ihm ein jeweiliger zweiter Rest (Gj), der derselben kleinen Primzahl entspricht, hinzugefügt wird.

**6.** Verfahren nach Anspruch 5, wobei jeder nachfolgende Erzeugungsschritt einer Primzahl die Schritte umfasst, die aus Folgendem bestehen:
zufälliges Auswählen einer neuen ersten ganzen Zahl (R), und Aktualisieren jedes der zweiten Reste (Gj) mit dem Doppelten des ersten Restes (Wj), der derselben kleinen Primzahl (Qj) entspricht, die während des vorherigen Erzeugungsschritts erhalten wurde.

**7.** Verfahren nach einem der Ansprüche 1 bis 6, wobei die erste ganze Zahl (R) aus Folgendem ausgewählt ist:
zufällig im Intervall [I+1,2I] mit:

$$I = \frac{2^{L-1}}{2P}$$

Wobei L die gewünschte Anzahl von Bits der zu erzeugenden neuen Primzahl ist, und/oder gerade ist oder so ist, dass der Rest (S) seiner gesamten Division durch die erste Primzahl (P) ungerade ist, sodass der Quotient (U) ungerade ist.

**8.** Verfahren nach Anspruch 1, umfassend die Schritte des Berechnens der ersten ganzen Zahl (R) auf Grundlage einer invertierbaren Zahl (X), die zu einem Satz von invertierbaren Elementen gehört, modulo ein Produkt (IIv) von Zahlen (Qj), die zu einer Gruppe von kleinen Primzahlen, die größer als 2 sind, gehören, sodass der Primzahlkandidat (Pr) durch keine der Zahlen der Gruppe teilbar ist, wobei die Primzahl (P) eine Anzahl von Bits aufweist, die einem Bit etwa eines Drittels der gewünschten Anzahl von Bits des Primzahlkandidaten entspricht.

**9.** Verfahren nach Anspruch 8, wobei die erste ganze Zahl (R) aus Folgendem ausgewählt ist:
sie ist gleich:

$$R = X - ((2P)^{-1} \bmod \Pi v) + Z \cdot \Pi v,$$

Wobei X eine invertierbare Zahl modulo das Produkt (IIv) der Primzahlen (Qj) der Gruppe ist, P die Primzahl ist und Z eine ganze Zahl ist, die gewählt ist, sodass die erste ganze Zahl R eine derartige Größe aufweist, dass der Primzahlkandidat (Pr) die gewünschte Anzahl von Bits aufweist, die gleich:

$$R = K + (K \bmod 2)P \cdot \Pi v + 2P \cdot Z \cdot \Pi V$$

ist,
mit K = $(((X - (2P)^{-1} - S)/P) \bmod \Pi v)P+S$, wobei S der Rest der gesamten Division der ersten ganzen Zahl R durch die Primzahl P ist, X eine invertierbare Zahl modulo das Produkt IIv der Primzahlen (Qj) der Gruppe ist, P die Primzahl ist, und Z eine vierte ganze Zahl ist, die ausgewählt ist, sodass die Zahl R eine derartige Größe aufweist, dass der Primzahlkandidat (Pr) die gewünschte Anzahl von Bits aufweist.

**10.** Verfahren nach Anspruch 8 oder 9, wobei, wenn der Primzahlkandidat (Pr) den ersten Primzahltest nicht besteht, es die Erzeugungsschritte eines neuen Primzahlkandidaten, indem einem Primzahlkandidaten ein Vielfaches der invertierbaren Zahl (X) modulo das Produkts (IIv) hinzugefügt wird, wobei das Vielfache nicht durch eine der das Produkt ausbildenden Zahlen teilbar ist, und das Anwenden des ersten Primzahltests auf den neuen Primzahlkandidaten umfasst.

**11.** Verfahren nach einem der Ansprüche 8 bis 10, wobei die invertierbare Zahl (X) Folgendes ist:
Erzeugt, indem nach einer invertierbaren Kandidatenzahl X gesucht wird, die kleiner als das Produkt IIv ist, wobei die folgende Gleichung erfüllt wird:

$$X^{\lambda \Pi v} = 1 \bmod \Pi v,$$

wobei λIIv ein Carmichael-Indikator für den Satz von invertierbaren Elemente modulo das Produkt IIv ist, der entweder zufällig aus einem Wert, der niedriger als das Produkt nv ist und um eins inkrementiert ist, oder aus der Menge $B \cdot (1 - X^{\lambda \Pi v} \bmod \Pi V)$ ausgewählt wird, bis er die Gleichung erfüllt:

$$X^{\lambda \Pi v} = 1 \bmod \Pi v,$$

Wobei B eine fünfte ganze Zahl ist, die zufällig zwischen eins und dem Produkt IIv ausgewählt ist.

**12.** Verfahren nach Anspruch 11, worin das Erzeugen der ersten Primzahl (Pr) die Schritte umfasst, die aus Folgendem bestehen:
zufälliges Auswählen einer Zahl (P), die aus der reduzierten Anzahl von Bits ausgebildet wird, und Anwenden auf die ausgewählte Zahl eines begrenzten Satzes von Miller-Rabin-Tests ($MR_A$, A = 2, 7, 61; 3, 5, 7, 11, 13, 17) in verschiedenen Basen (A), bis die ausgewählte Zahl den Satz von Miller-Rabin-Tests erfolgreich besteht, wobei die maximale Anzahl von Bits und die Basenwerte ausgewählt werden, sodass sie die Primalität der ersten Primzahl nachweisen, wobei die auf die zufällig ausgewählte Zahl (P) angewandten Miller-Rabin-Tests ($MR_A$) in den Basen 2, 7 und 61 mit einer maximalen (LL) Anzahl von Bits, die kleiner oder gleich 32 ausgewählt wird, beziehungsweise in den Basen 2, 3, 5, 7, 11, 13 und 17 mit einer maximalen (LL) Anzahl von Bits, die kleiner oder gleich 48 ausgewählt wird, durchgeführt werden können.

**13.** Verfahren nach einem der Ansprüche 1 bis 12, umfassend einen Erzeugungsschritt eines kryptografischen Schlüssels auf Grundlage der ersten nachgewiesenen eingegebenen Zahl.

**14.** Elektronische Vorrichtung, umfassend einem Berechnungsblock (CRU) zum Durchführen von Multiplikationen von großen Zahlen und/oder von modularen Potenzierungsvorgängen, **dadurch gekennzeichnet, dass** sie konfiguriert ist, um das Verfahren nach einem der Ansprüche 1 bis 13 zu implementieren.

**15.** Integrierter Schaltkreis auf einem Halbleiterchip, umfassend eine Vorrichtung nach Anspruch 14.

## Claims

1. An encryption method implemented in an electronic device (DV), the method comprising steps of:

a- generating a prime number (P),
b- selecting a first integer (R),
c- generating a candidate prime number (Pr) having a desired number of bits (L) using the following formula:

$$Pr = 2P \cdot R + 1$$

where Pr is the candidate prime number, P is the prime number having a number of bits smaller than the desired number of bits of the candidate prime number, and R is the first integer,
d- applying a first primality test to the candidate prime number, the first primality test comprising calculating a second integer number ($A^{2R}$) obtained by raising a third integer number (A) to a power twice the first integer (R), the candidate prime number (Pr) being prime if it does not have a common divisor with the second integer number ($A^{2R}$) decreased by one ($GCD(A^{2R} - 1, Pr) = 1$), and if the result of the third integer number raised to the power of the candidate prime number decreased by one is equal to 1 modulo the candidate prime number ($A^{Pr-1} = 1 \bmod Pr$),
e- if the candidate prime number succeeds the first primality test, supplying the candidate prime number as a proven prime number, otherwise repeating steps b- to e-, and
f- generating cryptographic data from the supplied proven prime number,

**characterized in that** the desired number of bits (L) of the candidate prime number (Pr) is equal to three times the number of bits of the prime number (P), to within one unit, the method comprising, before the application of the first primality test, steps of calculating a quotient (U) of an integer division of the first integer (R) by the prime number, the first integer being less than the square of the prime number increased by one, and repeating the step b- if the quotient is even, and the third integer number (A) is comprised between 2 and the first candidate number decreased by 2.

2. The method of claim 1 wherein, if the quotient (U) is even or the candidate prime number (Pr) fails the first primality test, the method comprises steps of:

incrementing the first integer (R) by one or a certain quantity according to the parity of the quotient (U) so that a new quotient calculated from the incremented value of R is odd,
modifying the candidate prime number (Pr) by adding twice the prime number (P) thereto, and
applying the first primality test to the modified candidate prime number.

3. The method according to one of claims 1 to 2, comprising a step of testing the divisibility of the candidate prime number (Pr) by small prime numbers (Qj), the generated candidate prime number being retained as candidate prime number only if it is not divisible by the small prime numbers.

4. The method according to one of claims 1 to 3, comprising several steps of generating a new prime number, a first generation step providing a prime number from a first prime number, each subsequent generation step providing a prime number from the prime number obtained in the preceding generation step, to obtain a prime number formed of a desired number of bits, each generation step comprising the steps of generating a candidate prime number and applying the first primality test to the candidate prime number.

5. The method according to claim 4, comprising steps of:

storing as first remainders, the remainders (Wj) of the integer divisions of the candidate prime number (Pr) by each of the small prime numbers (Qj), the candidate prime number being divisible by one of the small prime numbers if the corresponding remainder is equal to zero,
storing as second remainders, the remainders (Gj, Hj) of the integer divisions of twice the prime number (P) by each of the small prime numbers (Qj), and
if a new candidate prime number is calculated from the candidate prime number by adding twice the prime number (P) thereto, updating each of the first remainders (Wj) by respectively adding thereto the second remainder (Gj) corresponding to the same small prime number.

**6.** The method according to claim 5, wherein each subsequent step of generating a prime number comprises steps of:

randomly choosing a new first integer (R), and
updating each of the second remainders (Gj) with the double of the first remainder (Wj) corresponding to the same small prime number, obtained in the previous generation step.

**7.** The method according to one of claims 1 to 6, wherein the first integer (R) is selected:

randomly in the interval [I + 1, 2I] with:

$$I = \left\lfloor \frac{2^{L-1}}{2P} \right\rfloor$$

L being the desired number of bits of the new prime number to be generated,
and/or so that it is even and the remainder (S) of its integer division by the first prime number (P) is odd, so that the quotient (U) is odd.

**8.** The method according to claim 1, comprising steps of generating the first integer (R) from an invertible number (X) belonging to a set of invertible elements modulo a product ($\Pi v$) of numbers (Qj) belonging to a group of small prime numbers greater than 2, so that the candidate prime number (Pr) is not divisible by any number of the group, the prime number (P) having a number of bits equal, within one bit, to a third of the desired number of bits of the candidate prime number.

**9.** The method of claim 8, wherein the first integer (R) is selected:

either equal to:

$$R = X - ((2P)^{-1} \bmod \Pi v) + Z \cdot \Pi v,$$

X being an invertible number modulo the product ($\Pi v$) of the prime numbers (Qj) of the group, P being the prime number, and Z being an integer chosen so that the first integer R has a size such that the candidate prime number (Pr) has the desired number of bits,
or equal to:

$$R = K + (K \bmod 2)P \cdot \Pi v + 2P \cdot Z \cdot \Pi v,$$

where $K = (((X - (2P)^{-1} - S)/P) \bmod \Pi v)P+S$, S being the remainder of the integer division of the first integer R by the prime number P, X being an invertible number modulo the product $\Pi v$ of the prime numbers (Qj) of the group, P being the prime number, and Z being a fourth integer chosen so that the number R has a size such that the candidate prime number (Pr) has the desired number of bits.

**10.** The method according to claim 8 or 9, wherein if the candidate prime number (Pr) does not pass the primality test, it comprises steps of generating a new candidate prime number by adding to the candidate prime number (Pr) a multiple of the invertible number (X) modulo the product ($\Pi v$), the multiple not being divisible by one of the numbers forming the product, and applying the primality test to the new candidate prime number.

**11.** The method according to one of claims 8 to 10, wherein the invertible number (X) is:

either generated by looking for an invertible candidate number X less than the product $\Pi v$ satisfying the following equation:

$$X^{\lambda\Pi v} = 1 \bmod \Pi v,$$

$\lambda\Pi v$ being the Carmichael number of the set of invertible elements modulo the product $\Pi v$, or randomly chosen at a value lower than the product $\Pi v$ and incremented by one or the quantity $B\cdot(1 - X^{\lambda\Pi v} \bmod \Pi v)$ until it verifies the equation:

$$X^{\lambda\Pi v} = 1 \bmod \Pi v,$$

B being a fifth integer randomly chosen between one and the product $\Pi v$.

**12.** The method according to claim 11, wherein the generation of the first prime number (Pr) comprises steps of:

randomly choosing a number (P) formed of the reduced number of bits, and applying to the chosen number a limited set of Miller-Rabin tests ($MR_A$, A = 2, 7, 61 ; 3, 5, 7, 11, 13, 17) in different bases (A), until the chosen number successfully passes the Miller-Rabin test set, the maximum number of bits and base values being chosen to prove the primality of the first prime number, the Miller-Rabin (MRA) tests applied to the number (P) selected randomly, which can be carried out in bases 2, 7 and 61 with a maximum number of bits (LL) chosen less than or equal to 32, or else in bases 2, 3, 5, 7, 11, 13 and 17, with a maximum number of bits (LL) chosen less than or equal to 48.

**13.** The method according to one of claims 1 to 12, comprising a step of generating an encryption key from the supplied proven prime number.

**14.** An electronic device comprising a calculation unit (CRU) for executing multiplications of large numbers and/or modular exponentiation operations,
**characterized in that** it is configured to implement the method of one of claims 1 to 13.

**15.** An integrated circuit on a semiconductor chip, comprising a device according to claim 14.

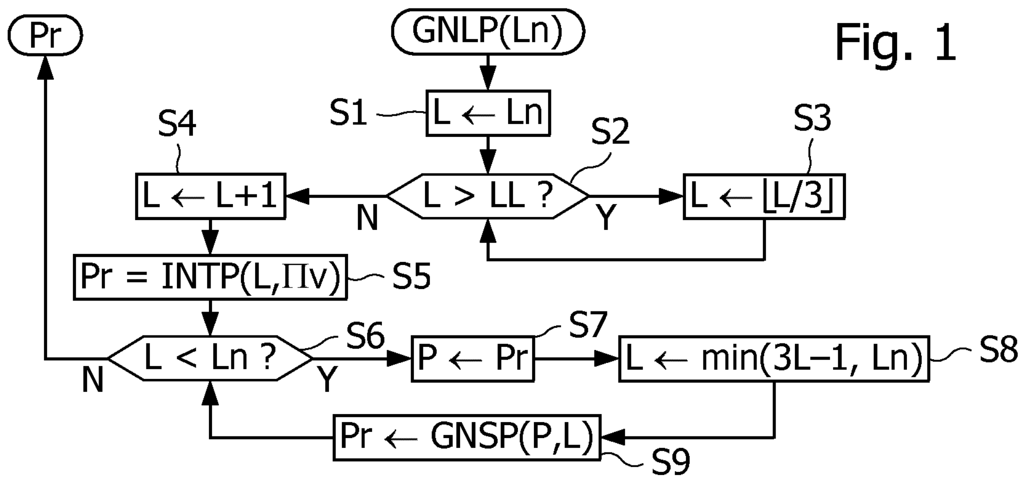


Fig. 1

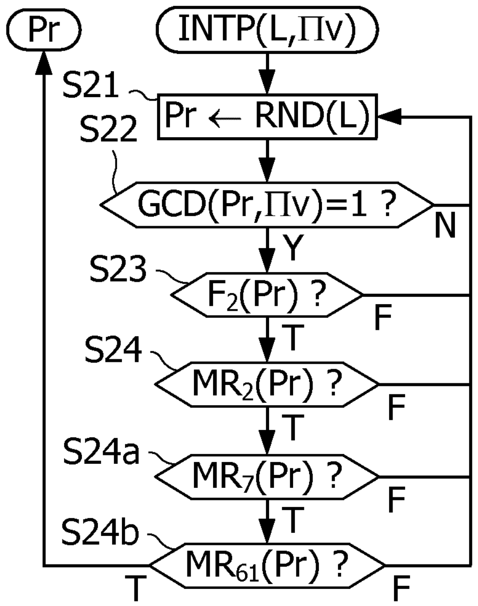


Fig. 2

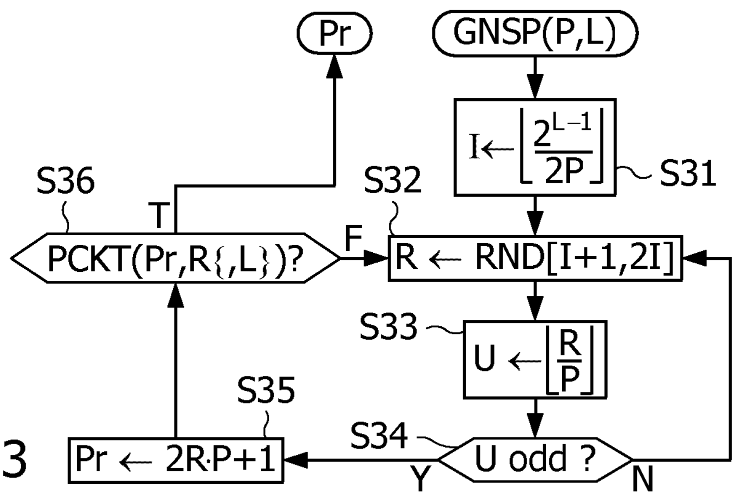


Fig. 3

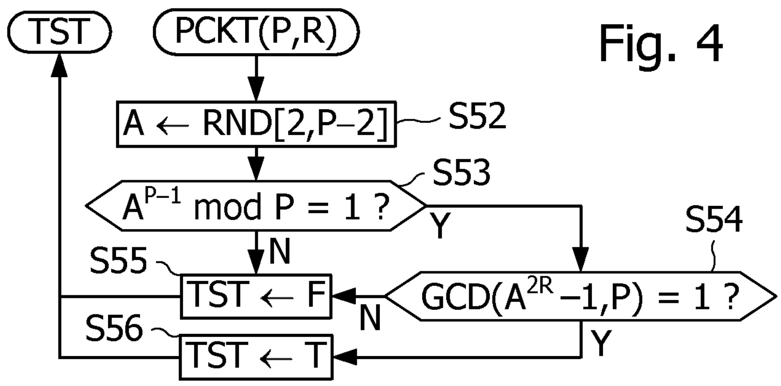


Fig. 4

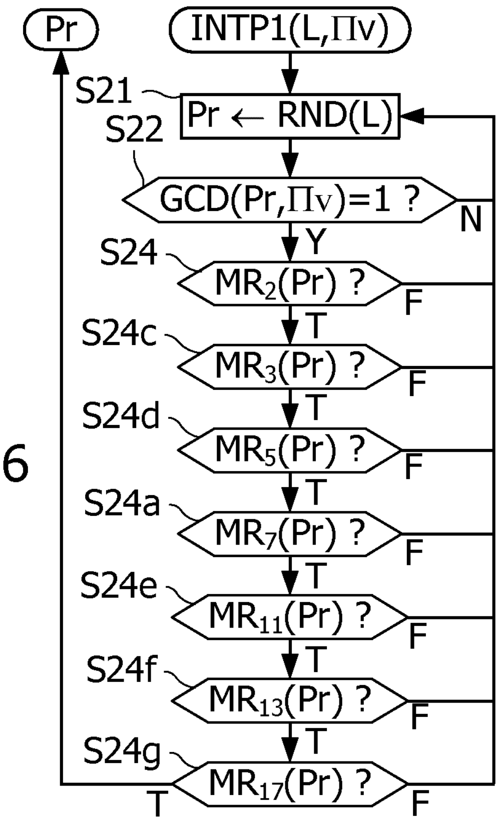


Fig. 6

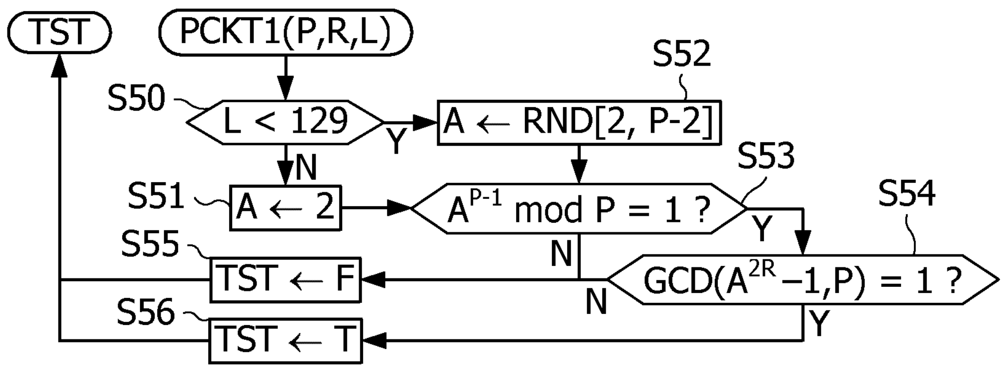


Fig. 5

Fig. 7

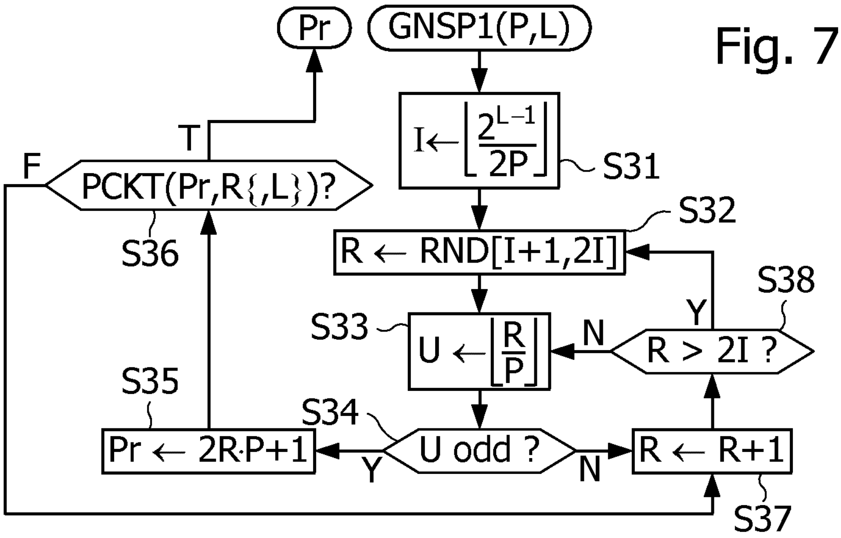


Fig. 8

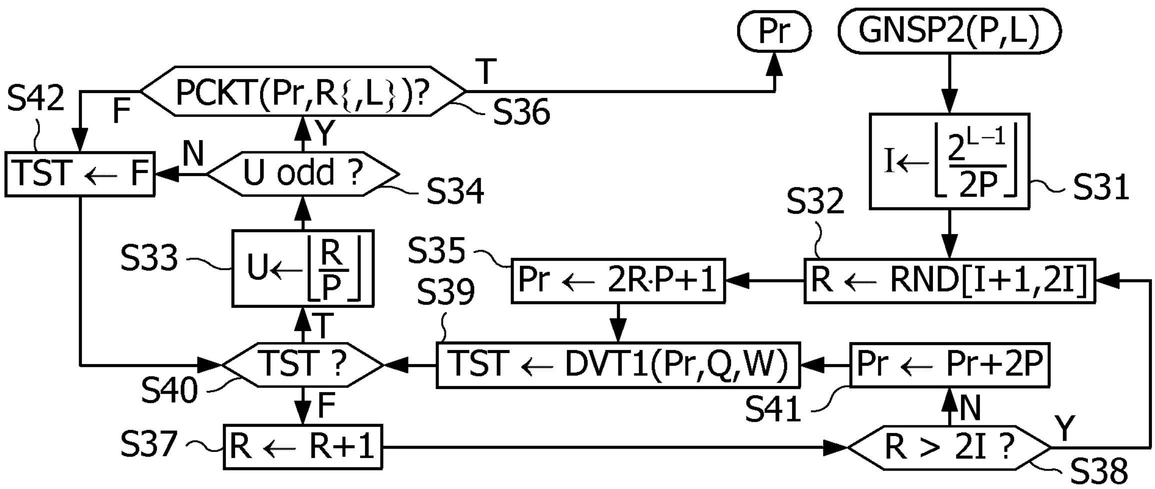


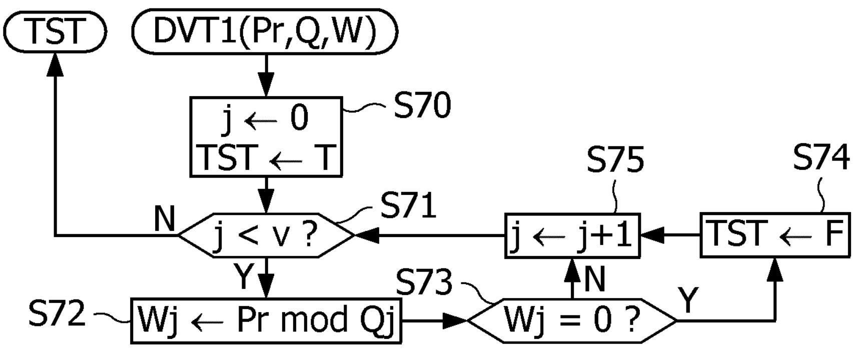


Fig. 9

Fig. 10

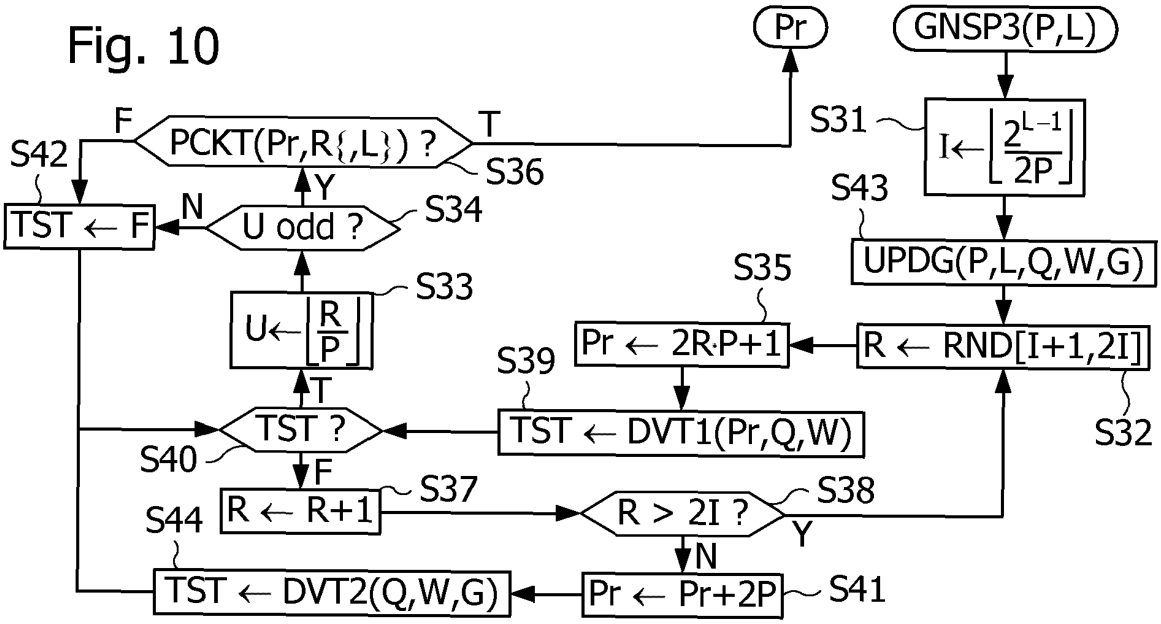


Fig. 11

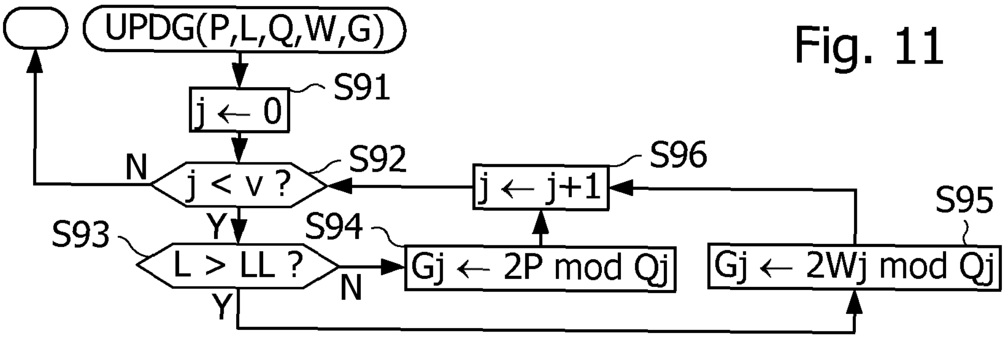


Fig. 12

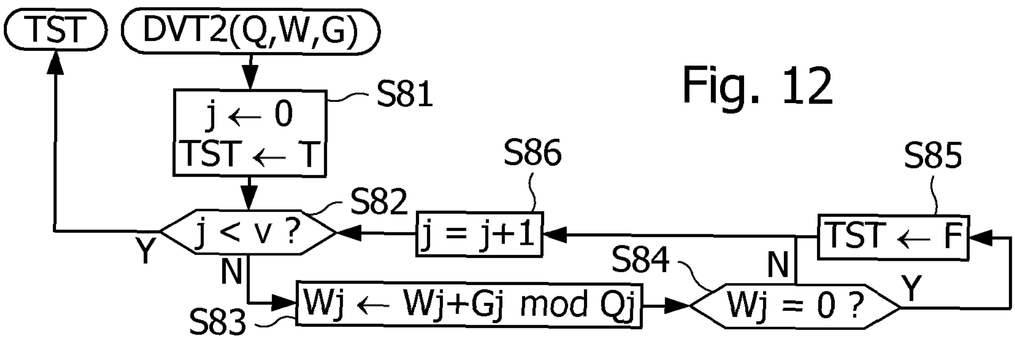

Fig. 13

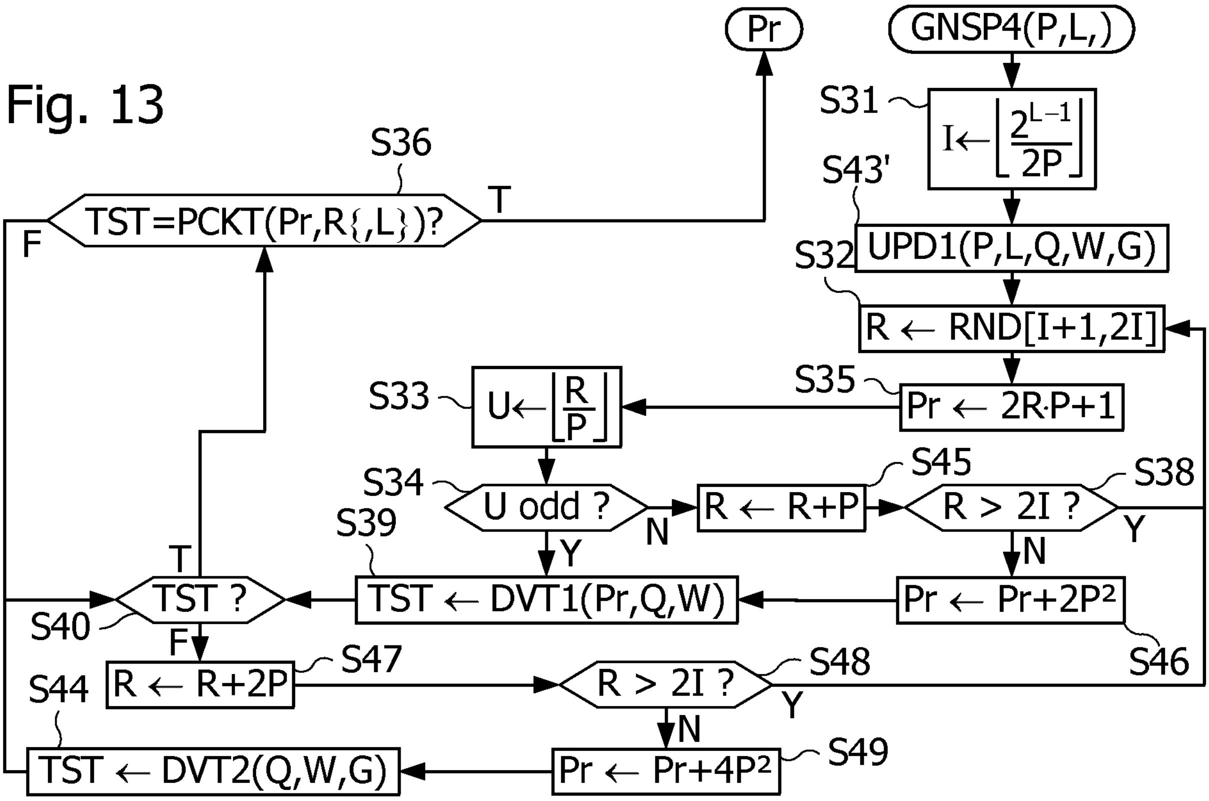
Pr
GNSP4(P,L,)
S31
I← ⌊2^(L−1)/2P⌋
S43'
S32
UPD1(P,L,Q,W,G)
R ← RND[I+1,2I]
S35
Pr ← 2R·P+1
S33
U← ⌊R/P⌋
S36
TST=PCKT(Pr,R{,L})?
T
F
S34
U odd ?
N
Y
S45
R ← R+P
S38
R > 2I ?
Y
N
S39
TST ← DVT1(Pr,Q,W)
Pr ← Pr+2P²
S46
T
TST ?
S40
F
S47
R ← R+2P
S48
R > 2I ?
Y
N
S44
TST ← DVT2(Q,W,G)
Pr ← Pr+4P²
S49

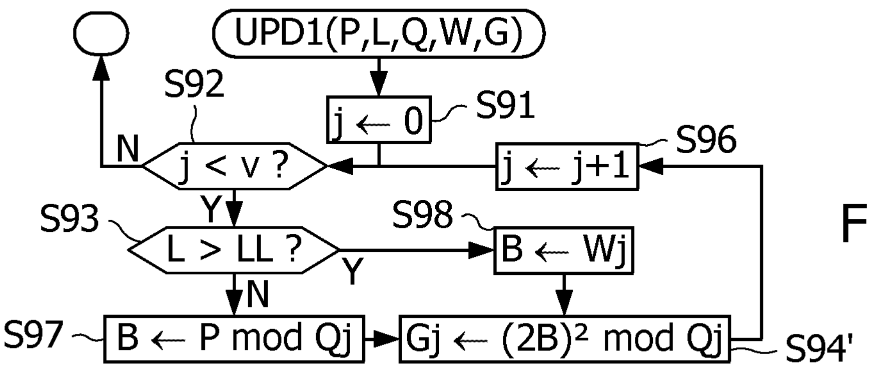
UPD1(P,L,Q,W,G)
S91
j ← 0
S92
N
j < v ?
S96
j ← j+1
Y
S93
L > LL ?
S98
B ← Wj
Y
N
S97
B ← P mod Qj
Gj ← (2B)² mod Qj
S94'

Fig. 14

Fig. 15

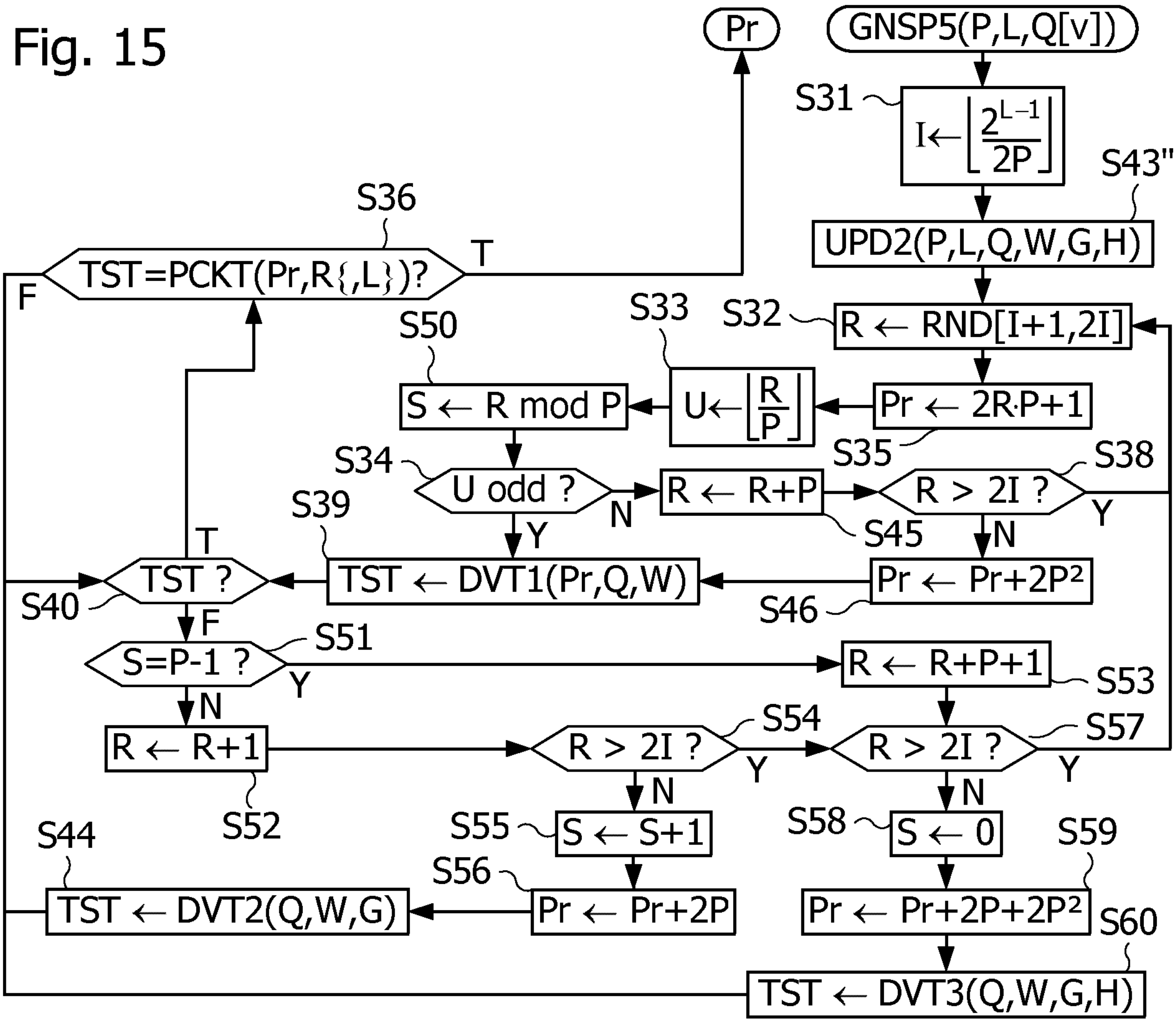
Pr
GNSP5(P,L,Q[v])
S31
S43"
UPD2(P,L,Q,W,G,H)
S36
TST=PCKT(Pr,R{,L})?
T
F
S50
S33
S32
R ← RND[I+1,2I]
S ← R mod P
Pr ← 2R·P+1
S35
S34
U odd ?
R ← R+P
R > 2I ?
S38
S39
S45
TST ?
TST ← DVT1(Pr,Q,W)
Pr ← Pr+2P²
S40
S46
S=P-1 ?
S51
R ← R+P+1
S53
R ← R+1
R > 2I ?
S54
R > 2I ?
S57
S44
S52
S55
S ← S+1
S58
S ← 0
S59
S56
TST ← DVT2(Q,W,G)
Pr ← Pr+2P
Pr ← Pr+2P+2P²
S60
TST ← DVT3(Q,W,G,H)

Fig. 16

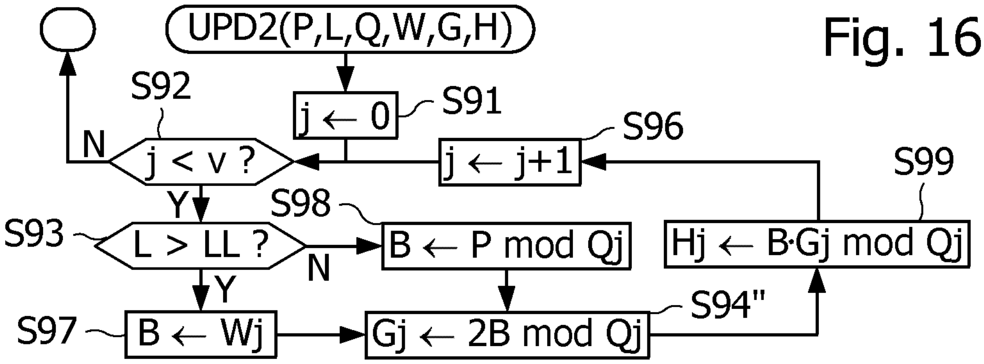
UPD2(P,L,Q,W,G,H)
S92
j ← 0
S91
S96
j < v ?
j ← j+1
S99
S93
S98
L > LL ?
B ← P mod Qj
Hj ← B·Gj mod Qj
S97
B ← Wj
Gj ← 2B mod Qj
S94"

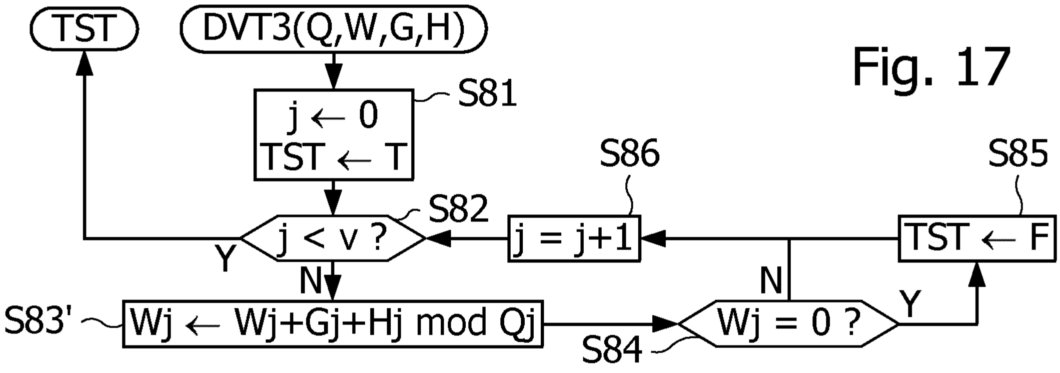
TST
DVT3(Q,W,G,H)
j ← 0
TST ← T
S81
S82
j < v ?
Y
N
S86
j = j+1
S85
TST ← F
S83'
Wj ← Wj+Gj+Hj mod Qj
Wj = 0 ?
S84
N
Y

Fig. 17

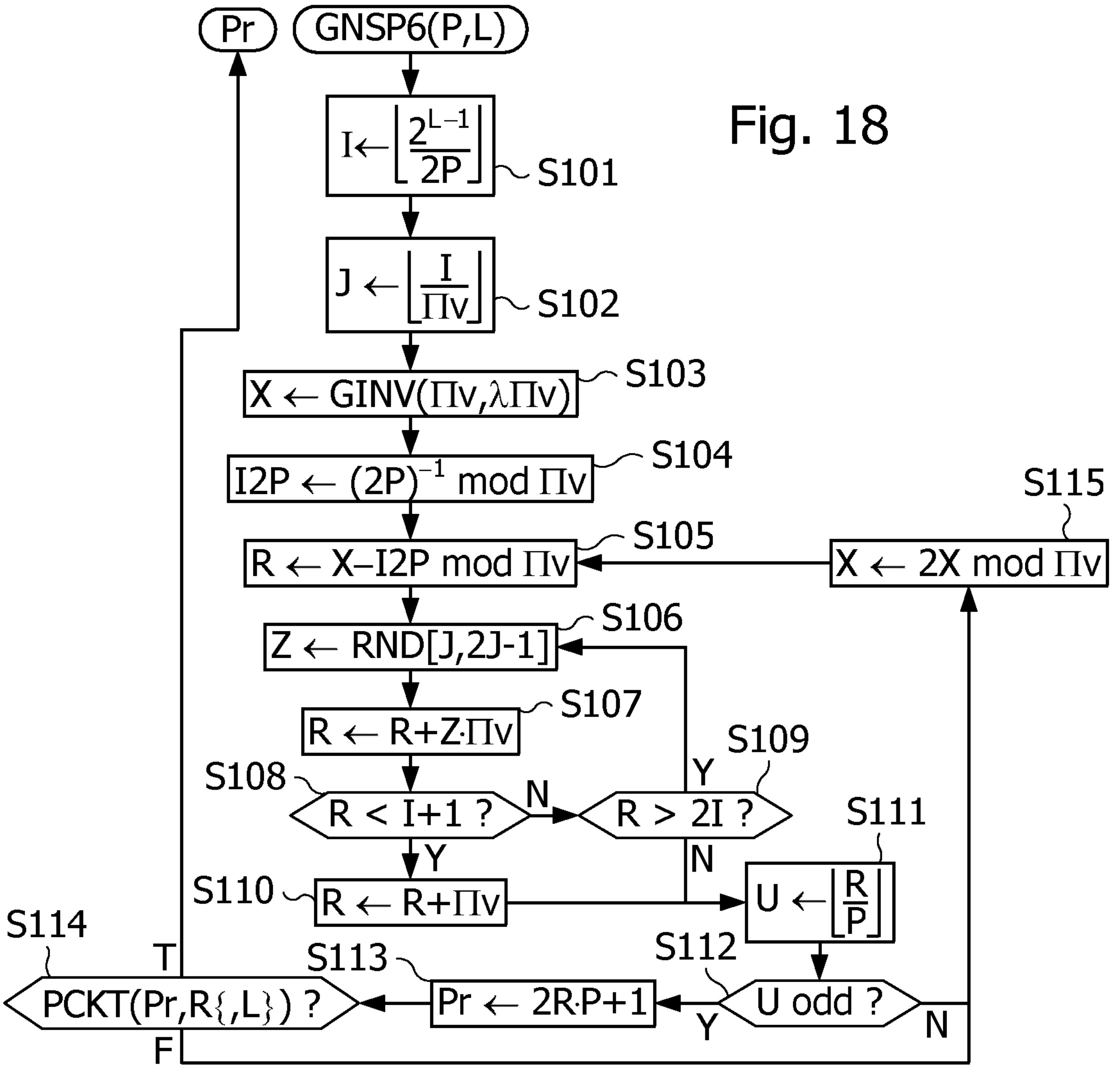
Pr
GNSP6(P,L)
S101
S102
X ← GINV(Πv,λΠv)
S103
I2P ← (2P)^-1 mod Πv
S104
R ← X–I2P mod Πv
S105
X ← 2X mod Πv
S115
Z ← RND[J,2J-1]
S106
R ← R+Z·Πv
S107
S108
R < I+1 ?
N
R > 2I ?
S109
Y
N
S111
S110
R ← R+Πv
U odd ?
S112
Pr ← 2R·P+1
S113
PCKT(Pr,R{,L}) ?
S114
T
F
Y
N

Fig. 18

Fig. 19

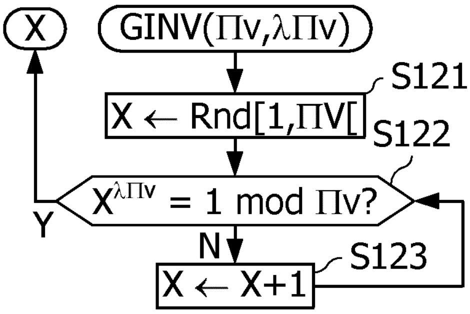


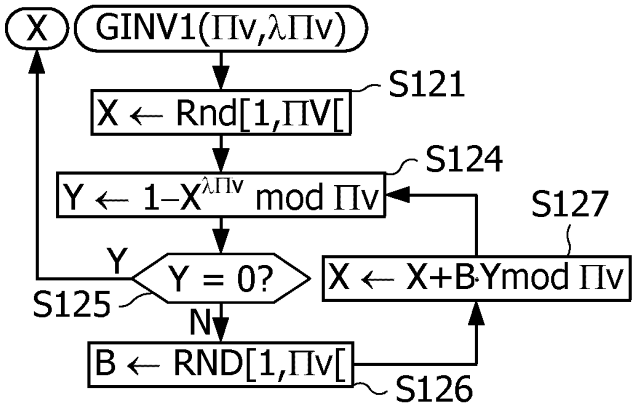


Fig. 20

Fig. 21

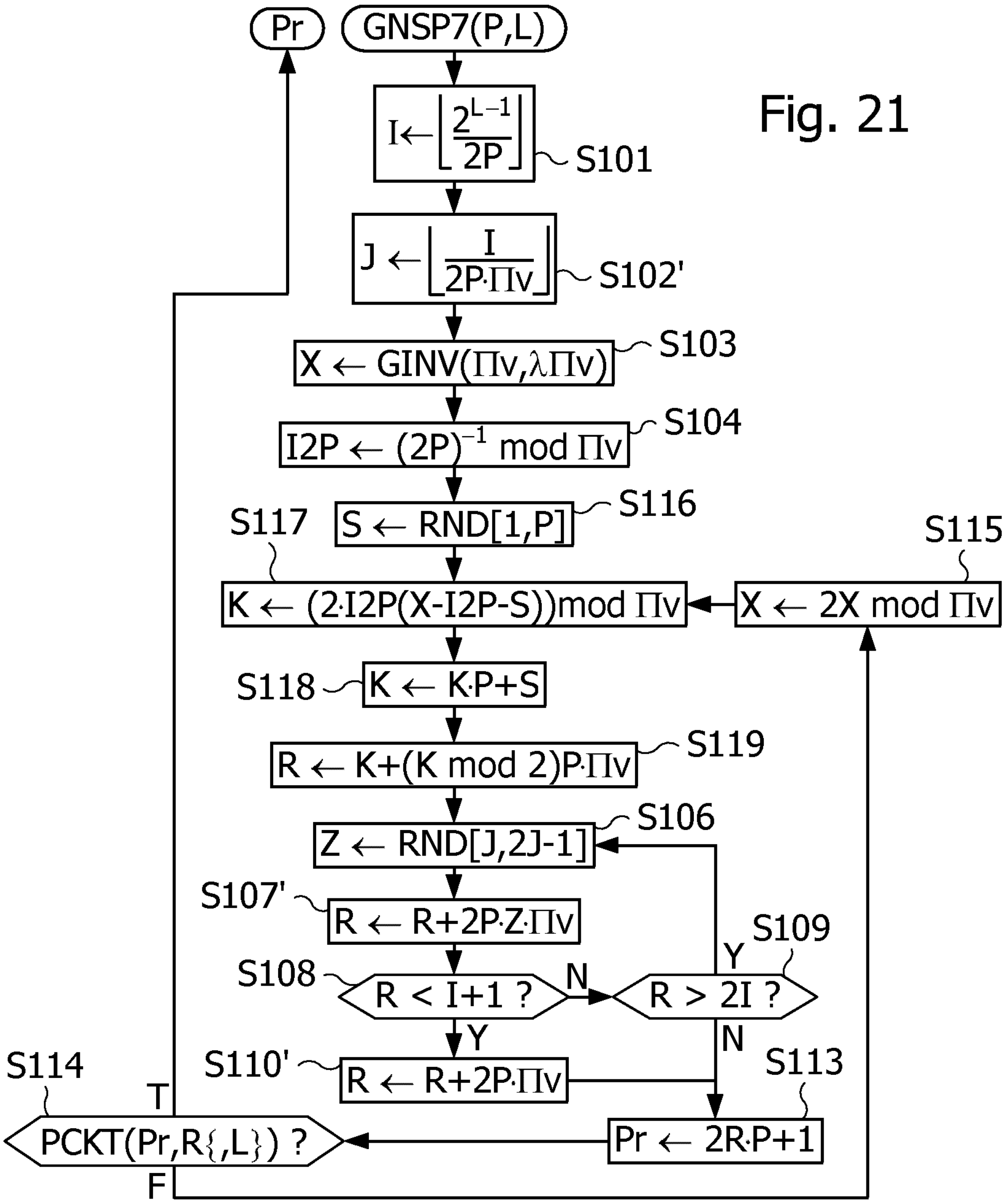

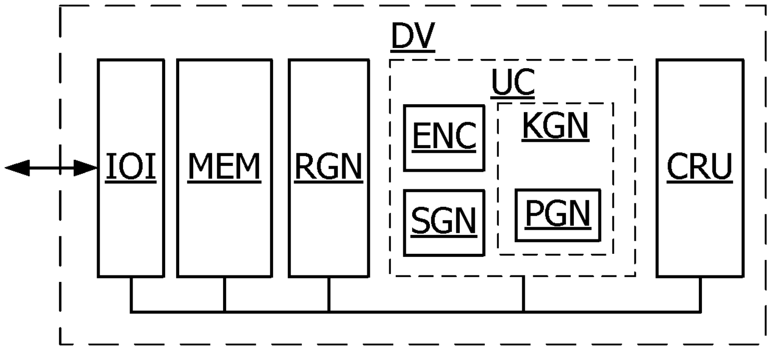


Fig. 22

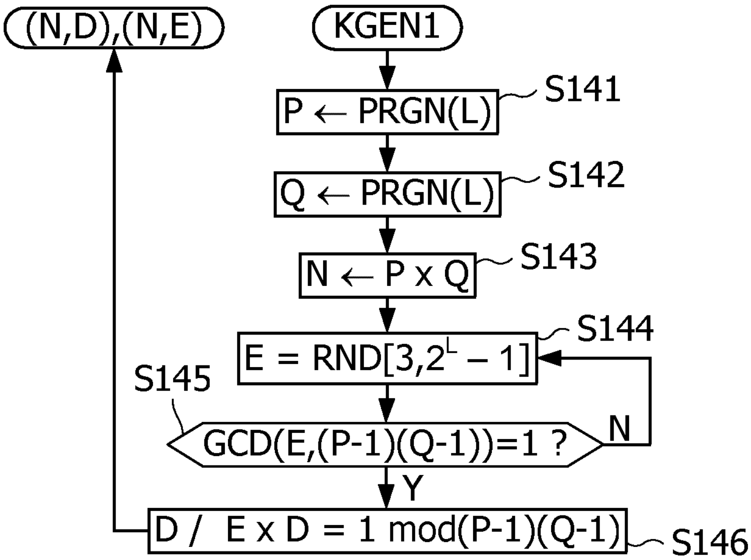


Fig. 23

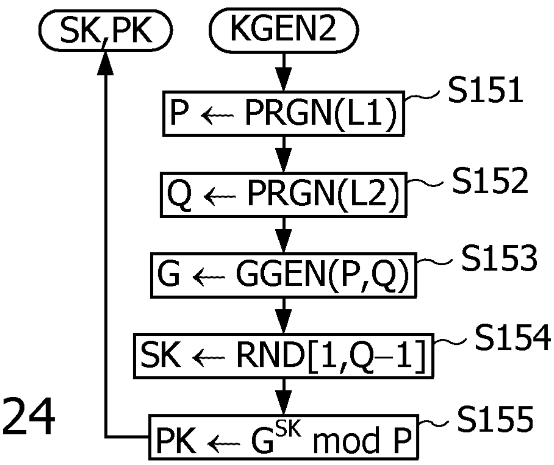


Fig. 24

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **C. POMERANCE ; C. SELFRIDGE ; J.L. WAGSTAFF.** The pseudoprimes to 25x10e9. *Mathematics of Computation,* 1990, vol. 35, 1003-1026
- **G. JAESCHKE.** On strong pseudoprimes to several bases. *Mathematics of Computation,* 1993, vol. 61, 915-926
- **U. M. MAURER.** Fast generation of prime numbers and secure public-key cryptographie parameters. *J. Cryptology,* 1995, vol. 8 (3), 123-155
- **J. SHAWE-TAYLOR.** Generating strong primes. *Electronic Letters,* 1986, vol. 22 (16), 875-877
- **FIPS PUB.** Digital Signature Standard. National Institute of Standards and Technology, Octobre 2009
- **J. BRILLHART ; D. H. LEHMER ; J. L. SELFRIDGE ; B. TUCKERMAN ; JR. S. S. WAGSTAFF.** Factorization of bn ± 1, b = 2; 3; 5; 7; 10; 11; 12 Up to High Powers. *American Mathematical Society,* 1988, vol. 22
- **M. JOYE ; P. PAILLIER ; S. VAUDENAY.** Génération of Prime Numbers. *CHES,* 2000, 340-354